# EUROPÄISCHE PATENTSCHRIFT

(11) **EP 3 714 020 B1**
(45) Veröffentlichungstag und Bekanntmachung des Hinweises auf die Patenterteilung: **06.09.2023**
(21) Anmeldenummer: 18811195.9
(22) Anmeldetag: 23.11.2018
(51) Int. Cl.: C09J 109/02, B29C 48/25, B29C 48/425, C09J 7/38

(54) **HERSTELLUNG EINER HAFTKLEBEMASSE AUF BASIS VON ACRYLNITRIL-BUTADIEN-KAUTSCHUK**
PRODUCING A PRESSURE-SENSITIVE ADHESIVE MASS ON THE BASIS OF ACRYLONITRILE-BUTADIENE RUBBER
FABRICATION D'UNE MASSE AUTOADHÉSIVE À BASE DE CAOUTCHOUC ACRYLONITRILE-BUTADIÈNE

(30) Priorität: 24.11.2017 DE 102017221039
(43) Veröffentlichungstag der Anmeldung: 30.09.2020
(73) Patentinhaber: TESA SE, 22848 Norderstedt (DE)
(72) Erfinder: SCHÖNROCK, Julia, 22527 Hamburg (DE); HEITMANN, Rolf, 25370 Seester (DE); KANTARCI, Attilla, 22081 Hamburg (DE)
(74) Vertreter: tesa SE
(86) Internationale Anmeldenummer: PCT/EP2018/082402
(87) Internationale Veröffentlichungsnummer: WO 2019/101938

(56) Entgegenhaltungen:
- EP-A2- 1 077 091
- WO-A1-2017/025492
- DE-A1- 19 939 077
- DE-A1-102008 004 388
- DE-A1-102016 002 143
- US-A1- 2006 269 743

## Beschreibung

Die Erfindung betrifft ein Verfahren zur kontinuierlichen und lösungsmittelfreien Herstellung einer Haftklebemasse auf Basis von festem Acrylnitril-Butadien-Kautschuk, eine nach diesem Verfahren erhältliche Haftklebemasse sowie ein Haftklebeband, das mindestens eine Schicht aus einer solchen Haftklebemasse umfasst.

Haftklebemassen sind seit langem bekannt. Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruht auf ihren adhäsiven Eigenschaften und auf ihren kohäsiven Eigenschaften. Als Basis für Haftklebemassen kommen verschiedene Verbindungen in Frage.

Klebebänder, die mit Haftklebemassen ausgerüstet sind, so genannte Haftklebebänder, werden heute im industriellen und privaten Bereich in vielfältiger Weise verwendet. Üblicherweise bestehen Haftklebebänder aus einer Trägerfolie, die ein- oder beidseitig mit einer Haftklebmasse ausgerüstet ist. Es gibt auch Haftklebebänder, die ausschließlich aus einer Haftklebmasseschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester wie Polyethylenterephthalat oder auch aus Papier, Gewebe oder Vliesstoff.

Die Selbst- beziehungsweise Haftklebemassen bestehen üblicherweise aus Acrylat-Copolymeren, Silikonen, Naturkautschuk, Synthesekautschuk, Styrolblockcopolymeren oder Polyurethanen.

Acrylnitril-Butadien-Kautschuke, Kurzzeichen NBR, abgeleitet von nitrile butadiene rubber, bezeichnet einen Synthesekautschuk, der durch Copolymerisation von Acrylnitril und Butadien in Masseverhältnissen von ungefähr 52:48 bis 10:90 gewonnen wird. Seine Herstellung erfolgt praktisch ausschließlich in wässriger Emulsion. Die dabei resultierenden Emulsionen werden als solche (NBR-Latex) eingesetzt oder zum Festkautschuk aufgearbeitet. Die Eigenschaften des Nitrilkautschuks hängen ab vom Verhältnis der Ausgangsmonomeren und von seiner Molmasse. Die aus Nitrilkautschuk zugänglichen Vulkanisate besitzen hohe Beständigkeit gegenüber Kraftstoffen, Ölen, Fetten und Kohlenwasserstoffen und zeichnen sich gegenüber solchen aus Naturkautschuk durch günstigeres Alterungsverhalten, niedrigeren Abrieb und verminderte Gasdurchlässigkeit aus. Seine Witterungsbeständigkeit ist dagegen eher mangelhaft.

Acrylnitril-Butadien-Kautschuke sind in einer großen Bandbreite verfügbar. Neben dem Acrylnitril-Gehalt erfolgt die Unterscheidung der verschiedenen Typen insbesondere anhand der Viskosität des Kautschuks. Diese wird üblicherweise durch die Mooney-Viskosität angegeben. Diese wiederum wird zum einen durch die Anzahl der Kettenverzweigungen im Polymer und zum anderen durch das Molekulargewicht bestimmt. Prinzipiell unterscheidet man bei der Polymerisation zwischen der sogenannten Kalt- und der Heißpolymerisation. Die Kaltpolymerisation erfolgt üblicherweise bei Temperaturen von 5 bis 15 °C und führt im Gegensatz zur Heißpolymerisation, die üblicherweise bei 30 bis 40 °C durchgeführt wird, zu einer geringeren Anzahl von Kettenverzeigungen.

NBR Kautschuke sind von einer Vielzahl von Herstellern wie zum Beispiel Nitriflex, Zeon, LG Chemicals und Lanxess erhältlich.

Carboxylierte NBR-Typen entstehen durch Terpolymerisation von Acrylnitril und Butadien mit kleinen Anteilen an (Meth)Acrylsäure in Emulsion. Sie zeichnen sich durch hohe Festigkeit aus. Die selektive Hydrierung der C,C-Doppelbindung von NBR führt zu hydrierten Nitrilkautschuken (H-NBR) mit verbesserter Beständigkeit gegen Temperaturerhöhung (bis 150 °C in Heißluft oder Ozon) oder Quellmittel (zum Beispiel schwefelhaltige Rohöle, Brems- beziehungsweise Hydraulikflüssigkeiten). Die Vulkanisation erfolgt mit üblichen Schwefelvernetzern, Peroxiden oder mittels energiereicher Strahlung.

Neben carboxylierten oder hydrierten NBR Kautschuken gibt es auch flüssige NBR-Kautschuke. Diese werden während der Polymerisation durch die Zugabe von Polymerisationsreglern in ihrem Molekulargewicht begrenzt und werden daher als flüssige Kautschuke erhalten.

Zur Einstellung anwendungsgerechter Eigenschaften können Haftklebemassen durch Zumischen von Klebharzen, Weichmacher, Vernetzern oder Füllstoffen modifiziert werden.

Zwecks verbesserter Verarbeitungsfähigkeit von Kautschuken, beispielsweise dem Granulieren von Granulat aus großen Kautschukballen vor der Weiterverarbeitung in Mischern, werden dem Kautschuken inerte Trennhilfsmittel wie Talkum, Silicate (Talk, Ton, Glimmer), Zinkstearat und PVC-Puder zugesetzt.

Ein Klebeband mit einer Haftklebemasse auf Basis eines Polymers, das im Wesentlichen von Acrylnitril und Butadien abgeleitet ist, ist in US 2601016 A beschrieben. Die US 6296730 B1 betrifft eine Haftklebemasse auf Basis von Acrylnitril-Butadien-Kautschuk. Die WO 2012 092129 A1 betrifft ein Vinylhaftklebeband, das antikorrosiv ist und mechanischen Schutz bietet, und das etwa 30,7 bis etwa 34,0 Gew .-% festen Butadien-Acrylnitril-Kautschuk, etwa 0,57 bis etwa 0,63 Gew .-% Antioxidationsmittel; etwa 9,7 bis etwa 12,9 Gew .-% Kohlenwasserstoffharz, etwa 1,52 bis etwa 1,68 Gew .-% Zinkoxid, etwa 8,7 bis etwa 9,5 Gew .-% flüssigen Butadien-Acrylnitril-Kautschuk, etwa 4,0 bis etwa 4,4 Gew .-% Aluminiumhydrosilikat, etwa 5,5 bis etwa 7,5 Gew .-% Diisononylphthalat, etwa 0,66 bis etwa 0,74 Gew .-% Ruß, etwa 1,5 bis etwa 1,7 Gew .-% amorphes Siliciumdioxid und etwa 25,8 bis etwa 38,8 Gew .-% Magnesium- und Calciumcarbonat beinhaltet. Die CN 104559860 A betrifft einen Haftklebstoff, der Styrol-Isopren-Styrol-Blockcopolymer, Klebharz, Nitrilkautschuk, Polyethylenwax, Antioxidationsmittel, Naphthaöl und Harz enthält. Die DE 10 2015 215 247 A1 betrifft eine Haftklebemasse, die als Basispolymer mindestens einen oder mehrere feste Acrylnitril-Butadien-Kautschuke sowie Klebharze enthält, wobei der Anteil der Klebharze bei 30 bis 130 phr liegt, dadurch gekennzeichnet, dass der Acrylnitril-Gehalt in dem oder den festen Acrylnitril-Butadien-Kautschuk(en) zwischen 10 und 30 Gew.-% liegt. Die Haftklebemasse ist kostenreduziert und verliert auch nach längerer Lagerung in verschiedenen Medien keine Klebkraft. Aufgrund ihres Eigenschaftsprofils sind Haftklebemassen auf Basis von Acrylnitril-Butadien-Kautschuk besonders geeignet für die Verwendung in elektronischen Geräten. Ein weiterer Bereich in dem die chemikalienbeständige Verklebung von Bedeutung ist, ist die Verklebung von Etiketten oder Labels zum Beispiel in Umgebungen, in denen der Kontakt mit Chemikalien möglich ist, wie zum Beispiel dem Motorraum, oder dort wo eine Manipulationssicherheit des Etiketts auch bei Anwendungen von verschiedenen Chemikalien gewährleistet sein muss.

Üblicherweise wird eine Haftklebmasse auf Basis von Acrylnitril-Butadien-Kautschuk hergestellt, indem das Basispolymer und die weiteren Bestandteile in einem geeigneten Lösemittel gelöst werden, und die erhaltene Mischung mittels beispielsweise Rasterwalzenauftrag, Kommarakelbeschichtung, Mehrwalzenbeschichtung oder in einem Druckverfahren auf einen Träger oder Liner beschichtet und anschließend das Lösemittel in einem Trockenkanal oder -ofen entfernt wird. Nachteilig an einem solchen Lösemittelverfahren sind insbesondere ein begrenzter Masseauftrag sowie das aufwändige Trocknen.

Alternativ kann die Beschichtung des Trägers oder Liners auch in einem lösemittelfreien Verfahren erfolgen. Hierzu wird der Acrylnitril-Butadien-Kautschuk in einem Extruder erwärmt und aufgeschmolzen bzw. erweicht. In dem Extruder können weitere Prozessschritte wie das Mischen mit weiteren Bestandteilen, Filtration oder eine Entgasung erfolgen. Die Schmelze wird dann mittels eines geeigneten Auftragsverfahrens, beispielsweise unter Verwendung einer Düse oder eines Kalanders, auf den Träger oder Liner beschichtet. Der Fachmann geht allerdings nicht davon aus, dass eine brauchbare Verarbeitung im Extruder gelingen könnte. So lehrt die Fachliteratur, dass 100 °C nicht überschritten werden sollten, weil Acrylnitril-Butadien-Kautschuk bei zu hohen Temperaturen zum Verstrammen (Cyclisieren) neigt, siehe zum Beispiel das Lehrbuch "Nitrilkautschuk" von W. Hofmann, Stuttgart Berliner Union, 1965, S.188. Dies schließt regelmäßig eine Verarbeitung mittels Extrusion aus. Setzt man den Acrylnitril-Butadien-Kautschuk über einen zu langen Zeitraum einer zu hohen Temperatur aus, kann der Kautschuk sogar verkohlen. Insbesondere bei niedrigen Verarbeitungstemperaturen erwartet man dagegen Klebmassen, die nicht homogen sind, d.h. typischerweise zahlreiche unaufgeschlossene Kautschukpartikel enthalten.

Die DE 199 39 077 A1 beschreibt ein Verfahren zur kontinuierlichen lösungsmittelfreien und mastikationsfreien Herstellung von Selbstklebemassen auf Basis von nicht-thermoplastischen Elastomeren in einem kontinuierlich arbeitenden Planetwalzenextruder mit einem Füll- und einem Compoundierteil, wobei das Compoundierteil des Planetwalzenextruders zumindest von einem Walzenzylinder gebildet wird:
Die Festkomponenten der Selbstklebemasse wie Elastomere und Harze werden in den Füllteil des Planetwalzenextruders eingefüllt, dann erfolgt die Übergabe der Festkomponenten der Selbstklebemasse aus dem Füllteil in den Compoundierteil, in dem die Flüssigkomponenten der Selbstklebemasse wie Weichmacher, Vernetzer und/ oder weiterer klebrig machender Harze aufgegeben werden,
Abschließend erfolgt die Herstellung einer homogenen Selbstklebemasse im Compoundierteil und das Austragen der Selbstklebemasse.

In der EP 1 077 091 A2 wird ein Verfahren offenbart zur kontinuierlichen lösungsmittelfreien und mastikationsfreien Herstellung von Selbstklebemassen auf Basis von nicht-thermoplastischen Elastomeren in einem kontinuierlich arbeitenden Aggregat mit einem Füll- und einem Compoundierteil, bestehend aus den folgenden Schritten
a) Aufgabe der Festkomponenten der Selbstklebemasse wie Elastomere und Harze in den Füllteil des Aggregats, gegebenenfalls Aufgabe von Füllstoffen, Farbstoffen und/oder Vernetzern,
b) Übergabe der Festkomponenten der Selbstklebemasse aus dem Füllteil in den Compoundierteil,
c) Zugabe der Flüssigkomponenten der Selbstklebemasse wie Weichmacher, Vernetzer und/oder weiterer klebrig machender Harze gegebenenfalls in geschmolzenem Zustand in den Compoundierteil,
d) Herstellung einer homogenen Selbstklebemasse im Compoundierteil,
e) Austragen der Selbstklebemasse und
f) Beschichtung der Selbstklebemasse auf ein bahnförmiges Material, wobei die Beschichtung des bahnförmigen Materials mit einem Mehrwalzenauftragswerk, besonders mit einem 2- bis 5-Walzenauftragswerk, ganz besonders mit einem 4-Walzenauftragswerk durchgeführt wird, so dass die Selbstklebemasse bei Durchgang durch ein oder mehrere Walzenspalte auf die gewünschte Dicke ausgeformt wird, und wobei die Walzen des Auftragswerkes einzeln auf Temperaturen von 20 °C bis 150 °C eingestellt werden können.

Die der vorliegenden Erfindung zugrunde liegende Aufgabe besteht somit darin, ein Verfahren zur lösungsmittelfreien Herstellung einer Haftklebemasse auf Basis von Acrylnitril-Butadien-Kautschuk bereitzustellen, bei dem keine Verkohlung auftritt und außerdem die resultierende Haftklebemasse homogen ist.

Die Aufgabe wird überraschenderweise durch ein Verfahren gelöst, wie es in Anspruch 1 oder in Anspruch 2 niedergelegt ist. Gegenstand der Unteransprüche sind dabei vorteilhafte Ausführungsformen des Verfahrens.

Dementsprechend betrifft die Erfindung ein Verfahren zur kontinuierlichen und lösungsmittelfreien Herstellung einer Haftklebemasse auf Basis von festem Acrylnitril-Butadien-Kautschuk, die 30 bis 160 phr Klebharz enthält, in einem kontinuierlich arbeitenden Aggregat in Form eines Planetwalzenextruders mit einem Füllteil und einem Compoundierteil, wobei der Compoundierteil aus mindestens zwei gekoppelten Walzenzylindern besteht, bei dem
a) der feste Acrylnitril-Butadien-Kautschuk, eine erste Klebharzfraktion in Form von 10 bis weniger als 100 phr vorzugsweise festem Klebharz und gegebenenfalls weitere Komponenten in den Füllteil des Planetwalzenextruders aufgegeben werden,
b) die Komponenten aus dem Füllteil in den Compoundierteil übergeben werden,
c) eine zweite Klebharzfraktion, vorzugsweise in Form von flüssigem Klebharz, und gegebenenfalls weitere Komponenten in den zweiten Walzenzylinder des Compoundierteils oder einen Walzenzylinder stromabwärts, d.h. downstream, davon zugegeben werden,
d) optional eine weitere Klebharzfraktion, vorzugsweise in Form von flüssigem Klebharz, und gegebenenfalls weitere Komponenten in mindestens einen weiteren Walzenzylinder stromabwärts zugegeben werden, und
e) die sich ergebende Haftklebemasse, die wie vorstehend definiert ist, aus dem Planetwalzenextruder ausgetragen wird,
dadurch gekennzeichnet, dass
die Wandungstemperatur der Walzenzylinder und die Temperatur der Zentralspindel des Planetwalzenextruders jeweils unabhängig voneinander weniger als 140 °C beträgt.

Darüber hinaus betrifft die Erfindung ein Verfahren zur kontinuierlichen und lösungsmittelfreien Herstellung einer Haftklebemasse auf Basis von festem Acrylnitril-Butadien-Kautschuk, die 30 bis 160 phr Klebharz enthält, in einem kontinuierlich arbeitenden Aggregat in Form eines Planetwalzenextruders mit einem Füllteil und einem Compoundierteil, wobei der Compoundierteil aus mindestens zwei gekoppelten Walzenzylindern besteht, bei dem
a) der feste Acrylnitril-Butadien-Kautschuk und gegebenenfalls weitere Komponenten in den Füllteil des Planetwalzenextruders aufgegeben werden,
b) die Komponenten aus dem Füllteil in den Compoundierteil übergeben werden,
c) eine erste Klebharzfraktion in Form von 10 bis weniger als 100 phr vorzugsweise festem Klebharz und gegebenenfalls weitere Komponenten in den ersten Walzenzylinder des Compoundierteils zugegeben werden,
d) eine zweite Klebharzfraktion, vorzugsweise in Form von flüssigem Klebharz, und gegebenenfalls weitere Komponenten in den zweiten Walzenzylinder des Compoundierteils oder einen Walzenzylinder stromabwärts davon zugegeben werden,
e) optional eine weitere Klebharzfraktion, vorzugsweise in Form von flüssigem Klebharz, und gegebenenfalls weitere Komponenten in mindestens einen weiteren Walzenzylinder stromabwärts zugegeben werden, und
f) die sich ergebende Haftklebemasse, die wie vorstehend definiert ist, aus dem Planetwalzenextruder ausgetragen wird,
dadurch gekennzeichnet, dass
die Wandungstemperatur der Walzenzylinder und die Temperatur der Zentralspindel des Planetwalzenextruders jeweils unabhängig voneinander weniger als 140 °C beträgt.

Überraschenderweise wurde somit gefunden, dass der erfindungsgemäße Harzsplit in Kombination mit der (Wandungs-)Temperatur der Walzenzylinder sowie der Zentralspindel des eingesetzten Planetwalzenextruders von jeweils unabhängig voneinander weniger als 140 °C im dargestellten Verfahren Haftklebemassen auf Basis von festem Acrylnitril-Butadien-Kautschuk hervorbringen, die homogen sind. Eine Verkohlung des Kautschuks findet außerdem nicht statt. Die nach dem dargestellten Verfahren hergestellten Haftklebemassen auf Basis von Acrylnitril-Butadien-Kautschuk weisen darüber hinaus gegenüber entsprechenden Haftklebemassen, die nach dem Lösemittelverfahren hergestellt worden sind, überraschenderweise verbesserte Scherfestigkeiten auf. Ohne an diese Theorie gebunden zu sein, wird vermutet, dass bei den erfindungsgemäßen (Wandungs-)Temperaturen der Walzenzylinder und der Zentralspindel zwar keine Verkohlung des Acrylnitril-Butadien-Kautschuks auftritt, aber jedenfalls eine Teilcyclisierung des Kautschuks, was in erhöhten Scherfestigkeiten mündet. Alternativ und ebenfalls ohne an diese Theorie gebunden zu sein, könnte die erhöhte Scherfestigkeit auch auf einem möglicherweise fehlenden oder unvollständigen Aufbrechen der Wechselwirkungen zwischen den Acrylnitrilgruppen des Kautschuks im erfindungsgemäßen Extrudierverfahren beruhen. Die Klebkraft von nach dem erfindungsgemäßen Verfahren hergestellten Haftklebemassen ist sowohl auf polaren Untergründen wie zum Beispiel Stahl, als auch auf unpolaren Untergründen wie zum Beispiel Polypropylen oder Polyethylen zufriedenstellend und ist vergleichbar mit den Klebkräften von entsprechenden Haftklebemassen, die nach dem Lösemittelverfahren hergestellt worden sind. Die erfindungsgemäß hergestellten Haftklebemassen sind außerdem typischerweise chemikalienbeständig.

Die Prüfung der Haftklebemasse auf Homogenität wird im Rahmen der vorliegenden Anmeldung wie folgt durchgeführt: 5 g der Haftklebemasse werden zwischen zwei Prozesslinern mithilfe einer Heißpresse bei 110°C und 5 bar Druck verpresst. Als Prozessliner werden dabei beidseitig mit unterschiedlich abgestuften Silikonsystemen beschichtete PET-Folien einer Dicke von 75 µm eingesetzt. Nach dem Abkühlen wird der Pressling auseinandergezogen, so dass sich eine Dicke der sich ergebenden Haftklebemasseschicht von etwa 50 µm ergibt. Die Schicht wird vor eine Lampe gehalten. Sie wird als homogen bezeichnet, wenn auf einer gestreckten Fläche von 100 cm² mit dem Auge weniger als 10, bevorzugt weniger als 5, und insbesondere weniger als 2 unaufgeschlossene Kautschuk-Partikel zu finden sind. Bei der genannten Prüfung sollte ferner kein nicht eingearbeitetes Klebharz zu sehen sein.

Mit einer Haftklebemasse auf Basis von festem Acrylnitril-Butadien-Kautschuk ist typischerweise eine Haftklebemasse gemeint, deren Polymer zu mindestens 50 Gew.-% aus festem Acrylnitril-Butadien-Kauschuk besteht, bezogen auf das gesamte in der Haftklebemasse enthaltene Polymer. In einer bevorzugten Ausführungsform besteht das in der Haftklebemasse enthaltene Polymer zu mehr als 90 Gew.-%, bevorzugter zu mehr als 95 Gew.-%, und insbesondere zu 100 Gew.-% aus festem, und gegebenenfalls flüssigem, Acrylnitril-Butadien-Kautschuk.

Flüssige Kautschuke zeichnen sich gegenüber festen Kautschuken dadurch aus, dass sie einen Erweichungspunkt Tε von weniger als 40 °C aufweisen. Feste Kautschuke sind somit dadurch gekennzeichnet, dass sie keinen Erweichungspunkt Tε von weniger als 40 °C aufweisen.

Wenn in der hergestellten Haftklebemasse der Anteil an Klebharz bei insgesamt 30 bis 160 phr liegt, ist die Haftklebemasse insbesondere gleichzeitig durch gute Adhäsions- und Kohäsionswerte gekennzeichnet. Vorzugsweise enthält die Haftklebemasse 50 bis 120 phr, bevorzugter 80 bis 110 phr, wie zum Beispiel 100 phr Klebharz. Hierdurch lassen sich typischerweise gleichzeitig besonders gute Adhäsions- und Kohäsionswerte erzielen.

Unter der Bezeichnung "Klebharz", englisch "Tackifier Resins", versteht der Fachmann einen Stoff auf Harzbasis, der die Klebrigkeit erhöht. Im Rahmen der vorliegenden Anmeldung gelten Klebharze nicht als Polymere.

Die in der vorliegenden Anmeldung gemachten Angaben in phr (engl. "parts per hundred rubber") bedeuten jeweils Gewichtsteile der betreffenden Komponente bezogen auf 100 Gewichtsteile aller festen Kautschukkomponenten der Haftklebemasse, also beispielsweise ohne Berücksichtigung von Klebharz oder flüssigem Kautschuk.

Mit der Auf- bzw. Zugabe von festem Klebharz ist erfindungsgemäß gemeint, dass das Klebharz unterhalb seines Erweichungspunkts Tε zu- bzw. aufgegeben wird. Mit der Auf- bzw. Zugabe von flüssigem Klebharz ist erfindungsgemäß dementsprechend gemeint, dass das Klebharz oberhalb seines Erweichungspunkts Tε zu- bzw. aufgegeben wird, beispielsweise 20 bis 40 °C oberhalb seines Erweichungspunkts Tε. Beim festen und flüssigen Klebharz kann es sich erfindungsgemäß somit um das gleiche Klebharz handeln, das jedoch je nach Anwendungstempertur fest oder flüssig ist. Typische Erweichungspunkte T_{E} von Klebharzen liegen bei mindestens 40 °C.

Planetwalzenextruder bestehen aus mehreren Teilen, nämlich einer umlaufenden Zentralspindel, einem die Zentralspindel im Abstand umgebenden Gehäuse mit einer Innenverzahnung und Planetspindeln, welche in dem Hohlraum zwischen Zentralspindel und innen verzahntem Gehäuse wie Planeten um die Zentralspindel umlaufen. Soweit im Folgenden von einer Innenverzahnung des Gehäuses gesprochen wird, so schließt das auch ein mehrteiliges Gehäuse mit einer Buchse ein, welches die Innenverzahnung des Gehäuses bildet. Im Planetwalzenextruder kämmen die Planetspindeln sowohl mit der Zentralspindel als auch mit dem innen verzahnten Gehäuse. Zugleich gleiten die Planetspindeln mit dem in Förderrichtung weisenden Ende an einem Anlaufring. Die Planetwalzenextruder besitzen im Vergleich zu allen anderen Extruderbauarten eine extrem gute Mischwirkung, jedoch eine viel geringere Förderwirkung.

Planetwalzenextruder fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Compoundierprozesse erweitert, die eine besonders temperaturkontrollierte Fahrweise erfordern.

Planetwalzenextruder gibt es je nach Hersteller in verschiedenen Ausführungen und Größen. Je nach gewünschter Durchsatzleistung liegen die Innendurchmesser der Walzenzylinder, d.h. Walzenzylinderdurchmesser, typischerweise zwischen 70 mm und 400 mm.

Für die Verarbeitung von Kunststoffen haben Planetwalzenextruder in der Regel einen Füllteil und einen Compoundierteil.

Der Füllteil des eingesetzten Planetwalzenextruders weist gemäß einer ersten Alternative eine Förderschnecke auf, auf die der feste Acrylnitril-Butadien-Kautschuk und gegebenenfalls weitere Komponenten kontinuierlich dosiert werden. Die Förderschnecke übergibt das Material dann dem Compoundierteil. Der Bereich des Füllteils mit der Schnecke ist vorzugsweise auf unter 20 °C gekühlt, beispielsweise auf 5 bis 18 °C, und insbesondere 8 bis 15 °C, um Anbackungen von Materialien auf der Schnecke möglichst zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies nicht von Bedeutung. Auch die Zentralspindel ist vorzugsweise auf unter 20 °C gekühlt, beispielsweise auf 5 bis 18 °C, und insbesondere 8 bis 15 °C, um Anbackungen von Materialien auf der Zentralspindel möglichst zu vermeiden. Ebenso bevorzugt ist eine Temperierung der Zentralspindel auf 20 bis 30 °C.

Das Compoundierteil besteht aus einer angetriebenen Zentralspindel und mehreren Planetenspindeln, die innerhalb eines oder mehrerer Walzenzylinder mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Das umgebende Gehäuse hat in zeitgemäßer Ausbildung einen Doppelmantel. Der Innenmantel wird durch eine Buchse, die mit der Innenverzahnung versehen ist, gebildet. Zwischen Innen- und Außenmantel ist die wichtige Kühlung des Planetwalzenextruders vorgesehen.

Die Planetenspindeln bedürfen keiner Führung in Umfangsrichtung. Durch die Verzahnung ist gewährleistet, dass der Abstand der Planetenspindeln in Umfangsrichtung gleich bleibt. Es kann von einer Eigenführung gesprochen werden.

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl und Art der in jedem Walzenzylinder umlaufenden Planetenspindeln kann variiert und somit den Erfordernissen des Prozesses angepasst werden. Die Spindelanzahl und -art beeinflusst das freie Volumen innerhalb des Planetwalzenextruders, die Verweilzeit des Materials im Prozess und bestimmt zudem die Flächengröße für den Wärme- und Materialaustausch. Die Anzahl und Art der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzenzylinderdurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Innendurchmesser des Walzenzylinders von 70 mm bis zu sieben Planetenspindeln verwendet, während bei einem Innendurchmesser des Walzenzylinders von 200 mm zum Beispiel zehn und bei einem Innendurchmesser des Walzenzylinders von 400 mm beispielsweise 24 Planetenspindeln verwendet werden können.

Geeignete Planetwalzenextruder sind beispielsweise beschrieben in der EP 2 098 354 A1, der WO 2017/050400 A1, der WO 2016/124310 A1 und der WO 2014/056553 A1.

Gemäß der ersten Variante des erfindungsgemäßen Verfahrens werden im ersten Schritt der feste Acrylnitril-Butadien-Kautschuk, eine erste Klebharzfraktion in Form von 10 bis weniger als 100 phr Klebharz und gegebenenfalls weitere Komponenten in den Füllteil des Planetwalzenextruders aufgegeben. Die erste Klebharzfraktion wird vorzugsweise in fester Form in den Füllteil aufgegeben. Dadurch lässt sich anschließend der Kautschuk mit dem Klebharz zu einer homogeneren Mischung verarbeiten. Außerdem können dadurch Anbackungen des Klebharzes auf der Schnecke bzw. Zentralspindel typischerweise vermieden werden.

Gemäß der zweiten Variante des erfindungsgemäßen Verfahrens werden zu Beginn der feste Acrylnitril-Butadien-Kautschuk und gegebenenfalls weitere Komponenten in den Füllteil des Planetwalzenextruders aufgegeben, dann werden die Komponenten aus dem Füllteil in den Compoundierteil übergeben, und anschließend wird eine erste Klebharzfraktion in Form von 10 bis weniger als 100 phr Klebharz in den ersten Walzenzylinder des Compoundierteils zugegeben. Die erste Klebharzfraktion wird vorzugsweise in fester Form in den ersten Walzenzylinder zugegeben. Dadurch lässt sich anschließend der Kautschuk mit dem Klebharz zu einer homogeneren Mischung verarbeiten. Außerdem können dadurch Anbackungen des Klebharzes auf der Schnecke bzw. Zentralspindel typischerweise vermieden werden.

Erfindungsgemäß handelt es sich bei der ersten Klebharzfraktion jeweils um 10 bis weniger als 100 phr Klebharz. Es werden mindestens 10 phr Klebharz eingesetzt, insbesondere um die Bestandteile gut mischen zu können und eine Mastikation, d. h. einen Molekulargewichtsabbau, des Kautschuks gering zu halten bzw. zu vermeiden. Die Mastikation des Kautschuks kann gering gehalten werden bzw. vermieden werden, da der Kautschuk hier nicht separat dem Einfluss hoher Scherenergie unterworfen wird, sondern zusammen mit dem Klebharz verarbeitet wird. Festes Klebharz erweicht während des Compoundierprozesses bei Einwirken von Scherenergie bzw. äußerer Temperierung. Durch die Anwesenheit des spätestens dann flüssigen Klebharzes wird das Ausmaß an Friktionsenergie derartig limitiert, dass die Mastikation des Kautschuks sowie hohe resultierende Compoundierungstemperaturen vermieden bzw. gering gehalten werden können. Ferner werden weniger als 100 phr Klebharz eingesetzt, insbesondere um eine Mischung der Bestandteile erzielen zu können. Vorzugsweise werden als erste Klebharzfraktion 10 bis 40 phr, bevorzugter 15 bis 35 phr, und insbesondere 20 bis 30 phr Klebharz zugegeben.

Als zweite oder weitere Klebharzfraktion wird im erfindungsgemäßen Verfahren vorzugsweise flüssiges Klebharz in einen Walzenzylinder zugegeben. Die Zugabe des Klebharzes in flüssiger Form ist insbesondere deshalb vorteilhaft, da sich dadurch die in den Walzenzylinder eingebrachte erweichte Kautschukmischung besser mit dem Klebharz vermischen und somit zu einer homogeneren Mischung verarbeiten lässt.

Erfindungsgemäß handelt es sich bei der zweiten oder weiteren Klebharzfraktion vorzugsweise jeweils um 10 bis 100 phr Klebharz. Es werden mindestens 10 phr Klebharz eingesetzt, insbesondere um die Bestandteile gut mischen zu können und eine Mastikation des Kautschuks gering zu halten bzw. zu vermeiden. Ferner werden nicht mehr als 100 phr Klebharz eingesetzt, insbesondere um eine Mischung der Bestandteile erzielen zu können. Vorzugsweise werden als zweite oder weitere Klebharzfraktion 20 bis 90 phr und insbesondere 30 bis 80 phr Klebharz zugegeben. Die zuzugebenden klebharze können demzufolge auch in drei oder mehr Fraktionen zugegeben werden.

Vorzugsweise werden die Klebharzfraktionen über Seitenbeschicker (Side-feeder) und/oder Anlaufringe und/oder Einspritzringe mit vorzugsweise radialen Bohrungen, falls es sich beim Klebharz um flüssiges Klebharz handelt, in die Walzenzylinder des Planetwalzenextruders zugegeben. Zwischen zwei zusammengeschalteten Walzenzylindern befindet sich im Allgemeinen ein Anlaufring, durch dessen freien Querschnitt die Zentralspindel führt und der die Planetenspindeln eines Walzenzylinders ortsfest hält. Anlaufringe können über zusätzlich eingesetzte Dispergierringe verschiedene freie Querschnitte aufweisen, womit der Rückstau des Produkts und damit der Füllgrad und die Verweilzeit beziehungsweise das Ausmaß an Scherenergie variiert und an die Prozessanforderungen angepasst werden kann. Zusätzlich können die Anlaufringe mit radialen Bohrungen versehen sein, über die Flüssigkeiten oder auch Schutzgase wie Stickstoff, Argon, Kohlendioxid o. ä. dem Compoundierteil des Planetwalzenextruders zugeführt werden können. Komponenten können so über den Einspritzring dem ersten Walzenzylinder zugegeben werden, über den ersten Anlaufring dem zweiten Walzenzylinder, über den zweiten Anlaufring dem dritten Walzenzylinder usw.

Vorzugsweise ist das Compoundierteil des eingesetzten Planetwalzenextruders bzw. das erfindungsgemäße Verfahren derart ausgestaltet, dass die sich nach Zugabe der letzten Klebharzfraktion ergebende Masse mindestens einen weiteren Walzenzylinder passiert, was sich insbesondere positiv auf die Homogenität der Bestandteile auswirken kann.

Vorzugsweise beträgt der Acrylnitrilgehalt des festen Acrylnitril-Butadien-Kautschuks zwischen 10 und 45 Gew.-%, bevorzugter zwischen 10 und 30 Gew.-%, noch bevorzugter zwischen 10 und 25 Gew.-%, und insbesondere zwischen 15 und 25 Gew.-%. In diesen Bereichen lassen sich besonders geringe Reißeranfälligkeiten und besonders hohe Schockresistenzen der sich ergebenden Haftklebemassen erzielen. Der Anteil an festem Acrylnitril-Butadien-Kautschuk in der hergestellten Haftklebemasse beträgt vorzugsweise mindestens 40 Gew.-%, bezogen auf das Gesamtgewicht der Haftklebemasse.

Vorzugsweise weist der feste Acrylnitril-Butadien-Kautschuk einer Mooney-Viskosität ( ML 1+4 bei 100 °C, gemäß der DIN 53523) von größer 35, und insbesondere größer 50 auf, um insbesondere die Handhabung des Rohstoffs als Granulat im Prozess zu vereinfachen.

Als Klebharze können im erfindungsgemäßen Verfahren beispielsweise kolophoniumbasierende Harze (zum Beispiel Foral, Foralyn) verwendet werden. Die Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Vorzugsweise wird als Klebharz Terpenphenolharz und/oder Polyterpenharz, beispielsweise auf Basis von α-Pinen und/oder β-Pinen, eingesetzt. Besonders bevorzugt wird Terpenphenolharz eingesetzt, beispielsweise ein Terpenphenolharz wie es von der Firma DRT unter dem Handelsnamen Dertophene oder der Firma Arizona unter dem Handelsnamen Sylvares vertrieben wird.

Geeignet und bevorzugt sind auch modifizierte Kohlenwasserstoffharze wie zum Beispiel modifizierte C9-Harze mit einem DACP von kleiner als - 30 °C.

Auch Kombinationen der vorstehend genannten Klebharze sowie weitere geeignete Klebharze können eingesetzt werden, um die Eigenschaften der resultierenden Haftklebemasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen. Dem Fachmann ist geläufig, welche Harze abhängig von den Eigenschaften des Acrylnitril-Butadien-Kautschuks, insbesondere des Acrylnitrilgehalts, vorzugsweise auszuwählen sind. Bevorzugte Klebharze weisen einen DACP von weniger als - 20 °C, bevorzugter weniger als - 40 °C und insbesondere weniger als - 60 °C auf.

Neben dem festen Acrylnitril-Butadien-Kautschuk und gegebenenfalls festem Klebharz können insbesondere zur Einstellung der optischen und klebtechnischen Eigenschaften als weitere Festkomponenten insbesondere Füllstoffe, Farbstoffe, Alterungsschutzmittel, Flammschutzmittel und/oder Vernetzer eingesetzt werden.

Füllstoffe werden beispielsweise zur Steigerung der Kohäsion einer Haftklebemasse eingesetzt. Füllstoffe können auch den Aufschluss der eingesetzten Polymere verbessern. Füllstoffe werden auch zur Gewichts- beziehungsweise Volumenerhöhung beigemischt. Die Füllstoffzugabe verbessert oftmals die technische Verwendbarkeit der Produkte und hat Einfluss auf deren Qualität, zum Beispiel Festigkeit, Härte usw. Die natürlichen, anorganischen und organischen Füllstoffe wie Calciumcarbonat, Kaolin, Dolomit und dergleichen werden mechanisch hergestellt. Auch bei Kautschuk kann man durch geeignete Füllstoffe die Qualität verbessern, so beispielsweise Härte, Festigkeit, Elastizität und Dehnung. Viel gebrauchte Füllstoffe sind Carbonate, insbesondere Calciumcarbonat, aber auch Silicate (Talk, Ton, Glimmer), Kieselerde, Calcium- und Bariumsulfat, Aluminiumhydroxid, Glasfasern und -kugeln sowie Ruße. Man kann anorganische und organische Füllstoffe auch nach ihrer Dichte unterscheiden. So erhöhen die oft in Klebemassen verwendeten anorganischen Füllstoffe wie Kreide, Titandioxid, Calcium- und Bariumsulfat die Dichte des Composites.

Daneben gibt es Füllstoffe, die die Gesamtdichte des Composites reduzieren können. Hierzu zählen Mikrohohlkugeln, sehr voluminöse Leichtfüllstoffe. Die Kugeln sind beispielsweise mit Luft, Stickstoff oder Kohlendioxid gefüllt, die Kugelschalen bestehen häufig aus Glas.

Bei den als Festkomponente eingesetzten Mikrohohlkugeln kann es sich alternativ auch um Mikroballons handeln. Unter "Mikroballons" werden erfindungsgemäß elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 µm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel^{®} DU-Typen (DU = dry unexpanded) von der Firma Akzo Nobel.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%.

Erfindungsgemäß können auch sogenannte vorexpandierte Mikroballons eingesetzt werden. Bei dieser Gruppe findet die Expansion schon vor der Einmischung in die Polymermatrix statt. Vorexpandierte Mikroballons sind beispielsweise unter der Bezeichnung Dualite^{®} oder mit der Typenbezeichnung Expancel xxx DE (Dry Expanded) von der Firma Akzo Nobel kommerziell erhältlich.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Bei den Alterungsschutzmitteln handelt es sich insbesondere um Antiozonantien, primäre Antioxidantien wie zum Beispiel sterisch gehinderte Phenole, sekundäre Antioxidantien wie zum Beispiel Phosphite oder Thioether, oder um Lichtschutzmittel wie zum Beispiel UV-Absorber oder sterisch gehinderte Amine.

Im erfindungsgemäßen Verfahren können dem festen Acrylnitril-Butadien-Kautschuk zur Verbesserung der Verarbeitbarkeit thermoplastische Elastomere wie beispielsweise Synthesekautschuke mit einem Anteil von bis zu 5 Gew.-% zugesetzt werden, bezogen auf das Gesamtgewicht der letztlich herzustellenden Haftklebemasse. Stellvertretend genannt seien an dieser Stelle vor allem die besonders verträglichen Styrol-Isopren-Styrol(SIS)- und Styrol-Butadien-Styrol(SBS)-Typen.

Außerdem können dem festen Acrylnitril-Butadien-Kautschuk inerte Trennhilfsmittel wie Talkum, Silicate (Talk, Ton, Glimmer), Zinkstearat und PVC-Puder zugesetzt werden, und zwar insbesondere in einer Größenordnung von 3 phr.

Im erfindungsgemäßen Verfahren zur Herstellung einer Haftklebemasse auf Basis von festem Acrylnitril-Butadien-Kautschuk können, insbesondere zur Einstellung der klebtechnischen Eigenschaften, Flüssigkomponenten wie insbesondere flüssiger Acrylnitril-Butadien-Kautschuk, Weichmacher und/oder Vernetzer eingesetzt werden.

Flüssige Kautschuke zeichnen sich gegenüber festen Kautschuken dadurch aus, dass sie einen Erweichungspunkt Tε von weniger als 40 °C aufweisen. Der Acrylnitrilgehalt in dem flüssigen Acrylnitril-Butadien-Kautschuk beträgt vorzugsweise zwischen 10 und 45 Gew.-%, bevorzugter zwischen 15 und 40 Gew.-%, noch bevorzugter zwischen 20 und 35 Gew.-% und insbesondere zwischen 25 und 30 Gew.-%. Der Anteil an flüssigem Acrylnitril-Butadien-Kautschuk, falls im erfindungsgemäßen Verfahren eingesetzt, beträgt vorzugsweise bis zu 30 phr, bevorzugter zwischen 1 und 20 phr und insbesondere zwischen 2 und 15 phr.

Weichmacher sind Plastifizierungsmittel wie zum Beispiel Weichharze, Phosphate oder Polyphosphate, paraffinische und naphthenische Öle, Oligomere wie Oligobutadienen, - isoprenen, flüssigen Terpenharze, pflanzliche und tierische Ölen und Fette. Weichharze können die gleiche chemische Basis wie die erfindungsgemäß einsetzbaren Klebharze aufweisen, unterscheiden sich von diesen jedoch durch ihren Erweichungspunkt, der typischerweise bei < 40 °C liegt.

Beim (flüssigen oder festen) Vernetzer handelt es sich vorzugsweise um einen thermisch aktivierbaren Vernetzer, beispielsweise ausgewählt aus der Gruppe der Schwefel-, der beschleunigten Schwefel-, der reaktiven Phenolharz- oder Diisocyanatvernetzungssysteme. Typischerweise wird der thermisch aktivierbare Vernetzer erfindungsgemäß erst bei einer solchen Temperatur aktiviert, die höher ist als die Temperatur der Masse im Compoundierteil des Planetwalzenextruders zumindest ab Zugabe des Vernetzers. Vorzugsweise wird der thermische Vernetzer erfindungsgemäß oberhalb von 140 °C und insbesondere oberhalb von 150 °C aktiviert. Ansonsten ist wegen im Compoundierteil einsetzender chemischen Vernetzungsreaktionen mit einer erheblichen Viskositätserhöhung zu rechnen, so dass die resultierende Haftklebemasse ihre Streichfähigkeit einbüßt und somit nicht mehr auf ein bahnförmiges Material aufgetragen werden kann.

Im Verfahren gemäß vorliegender Erfindung können die Festkomponenten als separate Komponenten, als gemeinsamer Premix oder als Teilvormischungen auf- bzw. zugegeben werden. Die Dosierung der Komponenten als Premix eignet sich besonders, wenn die Komponenten ähnliche Darreichungsformen beziehungsweise ähnliche Schüttdichten aufweisen, so dass sich auf diese Weise die Anzahl der Dosiersysteme gering halten lässt. Premixe lassen sich auf einfache Weise zum Beispiel in Pulvermischern herstellen. Vorzugsweise werden die Festkomponenten über mindestens ein volumetrisch oder gravimetrisch arbeitendes Dosiersystem wie zum Beispiel einen Trichter in den Füllteil des Planetwalzenextruders aufgegeben. Auch die Flüssigkomponenten können als separate Komponenten, als gemeinsamer Premix oder als Teilvormischungen auf- bzw. zugegeben werden.

Als vorteilhaft hat sich die Verwendung eines Planetwalzenextruders herausgestellt, dessen Compoundierteil aus zwei bis acht gekoppelten Walzenzylindern, vorzugsweise aus drei oder vier gekoppelten Walzenzylindern besteht, wobei jeder Walzenzylinder einen oder mehrere separate Temperierkreise aufweisen kann.

Im Unterschied zu sonst üblichen Herstellungsverfahren wird davon ausgegangen, dass im Planetwalzenextruder gemäß dem Verfahren der vorliegenden Erfindung allenfalls eine geringfügige Mastikation des Kautschuks stattfindet, da dieser hier nicht separat dem Einfluss hoher Scherenergie unterworfen wird, sondern zusammen mit einer oder mehreren flüssigen Komponenten verarbeitet wird. Diese Flüssigkomponenten können beispielsweise Harze oder Weichmacher wie zum Beispiel Öle sein, aber auch Harze, die erst während des Compoundierprozesses bei Einwirken von Scherenergie und/oder äußerer Temperierung aufschmelzen. Durch die Anwesenheit dieser Flüssigkomponenten wird das Ausmaß an Friktionsenergie derartig limitiert, dass die Mastikation des Kautschuks, d. h. der Molekulargewichtsabbau der Elastomeren, gering gehalten sowie hohe resultierende Compoundierungstemperaturen vermieden werden können.

Zudem weisen Planetwalzenextruder außerordentlich große Flächen auf, an denen es zum Materialabtausch und Oberflächenerneuerung kommt, mit der die über Friktion eingebrachte Scherenergie schnell abgeführt werden kann und auf diese Weise unerwünscht hohe Produkttemperaturen vermieden werden.

Die Anzahl und Art der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen. Gemäß vorliegender Erfindung sind zum Erzielen eines guten Verhältnisses von Compoundiergüte zu Produktrate vorzugsweise mindestens die Hälfte, besonders bevorzugt sogar mindestens ¾ der möglichen Anzahl an Planetenspindeln einzusetzen. Selbstverständlich kann jeder Walzenzylinder hinsichtlich Anzahl und Art der Planetenspindeln unterschiedlich bestückt sein und so den jeweiligen rezepturiellen und verfahrenstechnischen Anforderungen angepasst sein.

Für das erfindungsgemäße Verfahren ist es vorteilhaft, wenn das Compoundierteil des Planetwalzenextruders derart ausgestaltet ist, dass nach Zugabe der letzten Klebharzfraktion zur sich in einem Walzenzylinder des Planetwalzenextruders befindlichen Kautschukmasse die Masse mindestens einen weiteren Walzenzylinder passiert. Dies fördert ein vollständiges Aufschließen des Kautschuks bzw. die gewünschte Homogenisier- und Dispergierleistung bei wirtschaftlichen Durchsatzraten. Dementsprechend besteht das Compoundierteil des Planetewalzenextruders erfindungsgemäß vorzugsweise aus drei oder vier gekoppelten Walzenzylindern.

Die Walzenzylinder sind üblicherweise separat temperierbare Walzenzylinder, was eine ausgewogene Temperaturführung des Prozesses ermöglicht, die beispielsweise die Verwendung von thermisch aktivierbaren Vernetzersystemen erlaubt. Die Zentralspindel sowie jeder Walzenzylinder sollten vorzugsweise über einen oder mehrere separate Temperier- beziehungsweise Kühlkreise verfügen, um ein Temperaturregime zu ermöglichen, das den Einsatz thermisch aktivierbarer Vernetzungssysteme erlaubt. In Fällen, wo dies nicht erforderlich ist, können die Temperierkreise zusammengeschalteter Walzenzylinder auch miteinander verbunden werden, um die Anzahl an Temperiergeräten möglichst gering zu halten.

Vorzugsweise beträgt die Wandungstemperatur der Walzenzylinder unabhängig voneinander 80 bis 120 °C, bevorzugter 90 bis 110 °C. Über die Wandungstemperatur der Walzenzylinder lässt sich insbesondere der Eintrag an Prozesswärme steuern. Bei den genannten Wandungstemperaturen lassen sich Haftklebemassen herstellen, die typischerweise besonders homogen sind und gleichzeitig allenfalls einer geringfügigen Mastikation unterliegen. Bei den genannten Wandungstemperaturen ergeben sich außerdem Haftklebemassen mit besonders hohen Scherfestigkeiten.

Der Energieeintrag wird außerdem durch die Konfiguration des Planetwalzenextruders beeinflusst. Über die Drehzahl der Zentralspindel des Planetwalzenextruders lassen sich wiederum insbesondere der Eintrag von Scherenergie und die Gesamtverweildauer der Masse im Planetwalzenextruder steuern. Neben der Wandungstemperatur der Walzenzylinder und dem eingesetzten Extrudertyp wird der Energieeintrag daher auch durch die Drehzahl der Zentralspindel beeinflusst. Erfindungsgemäß kann einer Verringerung bzw. Erhöhung der Wandungstemperatur der Walzenzylinder typischerweise durch eine gegenläufige Veränderung der Drehzahl der Zentralspindel begegnet werden, um eine Haftklebemasse mit einem vergleichbaren Eigenschaftsprofil zu erhalten.

Insbesondere wird die Drehzahl aber beim Übergang von kleineren zu größeren Maschinen und Durchsätzen verändert, wobei charakteristischerweise eine kleinere Maschine (also eine solche mit kleinerem Innendurchmesser der Walzenzylinder von 70 mm) mit einer höheren Drehzahl betrieben wird (z.B. bei 90 Umdrehungen pro Minute), um ein vergleichbares Ergebnis zu erhalten zu einer größeren Maschine (also einer mit einem größeren Innendurchmesser der Walzenzylinder von 150 mm) mit einer niedrigeren Drehzahl (z.B. 35 Umdrehungen pro Minute). Dem Fachmann sind solche Scale-Up Anpassungen in Bezug auf Maschinengröße und Materialdurchsatz geläufig.

Charakteristisch für den Planetwalzenextruder ist aber auch, dass die Temperaturkontrolle der verarbeiteten Masse sehr gut über die eingestellten Gehäusetemperaturen gelingt, und regelmäßig besser als beispielsweise mit einem Doppelschneckenextruder. Bei einem Planetwalzenextruder kann deshalb oft auch bei einem Scale-Up-Schritt mit ähnlichen Wandungstemperaturen gearbeitet werden, selbst wenn die Drehzahl deutlich geändert wird.

Die Temperatur der Zentralspindel beträgt vorzugsweise weniger als 20 °C, wobei die Zentralspindel typischerweise mit einem Medium wie zum Beispiel Wasser oder Öl gekühlt ist, und wobei die Zulauftemperatur des Mediums vorzugsweise 5 bis 18 °C und insbesondere 8 bis 15 °C beträgt.

Beim Austritt aus dem Planetwalzenextruder ergeben sich typischerweise Temperaturen der Haftklebemassen von weniger als 170 °C, vorzugsweise von 90 bis 150 °C, bevorzugter von 110 °C bis 140 °C. Die Austrittstemperatur der Haftklebemasse wird typischerweise mittels Einstechfühler im Produktaustritt ermittelt.

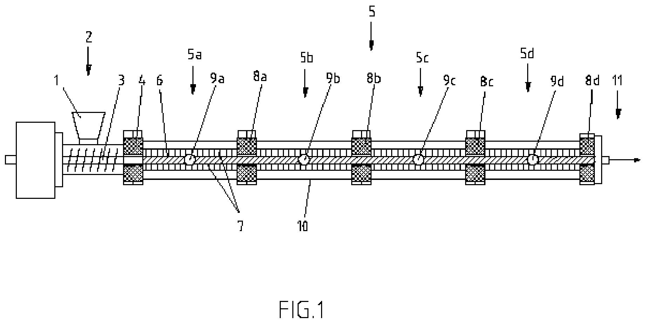

In den Beispielen wurde ein Planetwalzenextruder der Firma ENTEX Rust&Mitschke verwendet. Die Planetwalzenextruder-Konfiguration, die in den Beispielen verwendet wird, zeigt Figur 1.

Der Planetwalzenextruder hat einen Füllteil (2) und einen Compoundierteil (5), der aus vier hintereinander geschalteten Walzenzylindern (5a-5d) besteht. Innerhalb eines Walzenzylinders tauschen die durch die Umdrehung der Zentralspindel (6) angetriebenen Planetenspindeln (7) die Materialien zwischen Zentralspindel (6) und Planetenspindeln (7) beziehungsweise zwischen Planetenspindeln (7) und der Wandung (10) des Walzenzylinders (5a-5d) ab.

Am Ende jedes Walzenzylinders (5a-5d) befindet sich ein Anlaufring (8a-8d), der die Planetenspindeln (7) ortsfest hält. Optional befinden sich an diesen Stellen zusätzlich Dispergierringe, wie insbesondere in den Beispielen beschrieben.

Über die Füllöffnung (1) können Komponenten wie zum Beispiel Elastomere, Harze, Füllstoffe, Antioxidantien usw. auf die Förderschnecke (3) des Füllteils (2) des Planetwalzenextruders dosiert werden. Die Förderschnecke (3) übergibt die Materialien danach auf die Zentralspindel (6) des ersten Walzenzylinders (5a). Zur Verbesserung des Materialeinzugs zwischen Zentralspindel (6) und Planetenspindeln (7) werden im ersten Walzenzylinder (5a) vier lange und drei kurze Planetenspindeln (7) verwendet.

Die innen hohle Förderschnecke (3) und Zentralspindel (6) sind kraftschlüssig miteinander verbunden und besitzen einen gemeinsamen Temperierkreis. Jeder Walzenzylinder (5a-5d) des Compoundierteils (5) verfügt über eine unabhängige Temperierung. Über einen weiteren Temperierkreis kann das Füllteil (2) gekühlt werden. Als Temperiermedium kann Wasser verwendet werden.

Die Dosierung von Flüssigkeiten wie flüssigem Klebharz, Weichmacheröl beziehungsweise Vernetzer kann beispielsweise über den Einspritzring (4) vor dem ersten Walzenzylinder (5a) beziehungsweise über die mit Bohrungen versehenen Anlaufringe (8a-8d) oder in Kombination beider Möglichkeiten erfolgen. Die Walzenzylinder (5a-5d) sind in ungefähr der Mitte der Zylinder mit einer Öffnung für Seitenbeschickung versehen. Ebenso geeignet und bevorzugt sind alternativ Seitenbeschicker nach ungefähr ¼ jedes Zylinders. Über diese können bei Bedarf über Seitenbeschicker (9a-9d) flüssige oder feste Komponenten zugegeben werden.

Die Temperatur der Haftklebemasse wird mittels Einstechfühler im Produktaustritt (11) ermittelt.

Das erfindungsgemäße Verfahren erlaubt die Herstellung von hochleistungsfähigen Haftklebemassen.

Im erfindungsgemäßen Verfahren kann die Haftklebemasse nach dem Austragen aus dem Planetwalzenextruder mindestens einseitig auf ein bahnförmiges Material, d.h. einen bahnförmigen Träger, beschichtet werden. Als bahnförmige Trägermaterialien für die erfindungsgemäß hergestellten hochleistungsfähigen Haftklebemassen sind je nach Verwendungszweck des bereitzustellenden Klebebandes alle bekannten Träger, gegebenenfalls mit entsprechender chemischer oder physikalischer Oberflächenvorbehandlung der Streichseite sowie antiadhesiver physikalischer Behandlung oder Beschichtung der Rückseite geeignet. Genannt seien beispielsweise gekreppte und ungekreppte Papiere, Polyethylen-, Polypropylen-, mono- oder biaxial orientierte Polypropylenfolien, Polyesterfolien wie PET-Folien, PVC- und andere Folien, bahnförmige Schaumstoffe, beispielsweise aus Polyethylen und Polyurethan, Gewebe, Gewirke und Vliese. Schließlich kann das bahnförmige Material ein antiadhäsives oder beidseitig antiadhäsiv beschichtetes Material sein wie Trennpapiere oder Trennfolien. Das bahnförmige Material kann somit ein permanenter Träger oder ein temporärer Träger, d.h. ein Liner, sein. Temporäre Träger werden erfindungsgemäß nicht als Bestandteil eines Haftklebebands angesehen.

Das erfindungsgemäße Verfahren erlaubt somit im Verbund mit einer nachgeschalteten Beschichtungs- und gegebenenfalls Vernetzungseinheit die Herstellung von hochleistungsfähigen Haftklebebändern. Dabei wird die erfindungsgemäß hergestellte Haftklebemasse mit einem Auftragswerk zumindest einseitig auf ein bahnförmiges Material lösemittelfrei beschichtet. Die vorliegende Erfindung ermöglicht dementsprechend auch ein Haftklebeband, das mindestens eine Schicht aus einer nach dem erfindungsgemäßen Verfahren herstellbaren Haftklebemasse umfasst.

Vorzugsweise ist die Beschichtungseinheit ein Kalander oder eine Düse, durch den beziehungsweise durch die die Klebemasse auf ein Trägermaterial aufgebracht wird. Kalander ermöglichen, dass die Klebemasse beim Durchgang durch einen oder mehrere Walzenspalte auf die gewünschte Dicke ausgeformt wird.

Erfindungsgemäß wird vorgeschlagen, die Beschichtung der bevorzugt hergestellten Klebemassen mit einem Mehrwalzenauftragswerk durchzuführen. Dies können Auftragswerke bestehend aus mindestens zwei Walzen mit mindestens einem Walzenspalt bis zu fünf Walzen mit drei Walzenspalten sein.

Um das Übergabeverhalten der ausgeformten Masseschicht von einer auf eine andere Walze zu verbessern, können weiterhin antiadhäsiv ausgerüstete Walzen oder Rasterwalzen zum Einsatz kommen. Um einen hinreichend präzise ausgeformten Klebstofffilm zu erzeugen können die Umfangsgeschwindigkeiten der Walzen Differenzen aufweisen.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.

Je nach Art des zu beschichtenden bahnförmigen Trägermaterials kann die Beschichtung im Gleichlauf- oder Gegenlaufverfahren erfolgen.

Das Ausformaggregat kann auch durch einen Spalt gebildet werden, der sich zwischen einer Walze und einem feststehenden Rakel ergibt. Das feststehende Rakel kann ein Messerrakel sein oder eine feststehende (Halb-)Walze.

Ein weiteres bevorzugtes Beispiel ist ein 3-Walzenauftragswerk aus zwei Masseauftragswalzen und einer Kühlwalze, wobei vorzugsweise die Masseauftragswalzen eine Temperatur von 80 bis 160 °C, bevorzugter 100 bis 140 °C aufweisen und die Kühlwalze vorzugsweise eine Temperatur von weniger als 20 °C, vorzugsweise weniger als 10 °C aufweist, und wobei typischerweise die Temperatur der zweiten Masseauftragswalze geringer ist als die der ersten Masseauftragswalze.

Ein weiteres bevorzugtes Auftragsverfahren umfasst die Beschichtung zwischen zwei bahnförmigen Trägermaterialien, wobei die Klebmasse an einem Zweiwalzenkalander zwischen diesen beiden Trägermaterialien ausgeformt wird. Die Walzentemperaturen betragen typischerweise zwischen 60 und 140 °C. Bevorzugt sind die Trägermaterialien dabei antiadhäsiv ausgerüstet, wie beispielsweise silikonisiertes PET oder Papier.

In einer bevorzugten Ausführungsform des erfindungsgemäßen Verfahrens ist zwischen Planetwalzenextruder und der eingesetzten Beschichtungsvorrichtung eine Schmelzepumpe oder ein Extruder zur Klebmasseförderung, insbesondere ein Entgasungsextruder wie beispielweise ein Doppelschneckenextruder, angeordnet, der drehzahl- oder druckgeregelt, vorzugsweise druckgeregelt betrieben wird. Um beim Beschichten einen definierten, vollflächigen Masseauftrag auf dem bahnförmigen Material, d.h. bahnförmigen Träger, zu erhalten, ist es vorteilhaft, wenn die Haftklebemasse vor Eintritt in eine Beschichtungsdüse und/oder einen Kalander einer Entgasung unterworfen wird, was besonders wichtig ist im Falle der Verwendung von Schutzgasen während des Compoundierprozesses im Planetwalzenextruder. Gemäß dem Verfahren der vorliegenden Erfindung erfolgt die Entgasung unter Einfluss von Vakuum vorzugsweise in Schneckenmaschinen, die zugleich die Druckverluste der Rohrleitungen und Beschichtungsdüse überwinden können.

In einer weiteren bevorzugten Ausführungsform des erfindungsgemäßen Verfahrens wird die Haftklebemasse in einem der Beschichtung nachfolgenden Schritt vernetzt, wobei die Haftklebemasse vorzugsweise ohne Promotoren mittels Elektronenstrahlen vernetzt wird (ESH-Vernetzung). Eine Vernetzung der Haftklebemasse hat insbesondere den Vorteil, dass dadurch die Scherfestigkeit, auch bei erhöhten Temperaturen wie zum Beispiel 70 °C oder 80 °C, weiter erhöht wird.

Auch UV-Strahlen können für die Vernetzung eingesetzt werden, hierbei müssen der Haftklebemasse entsprechende UV-Promotoren zugesetzt werden. Alternativ kann unter Temperatureinwirkung, d.h. thermisch vernetzt werden, hierbei müssen der Haftklebemasse entsprechende thermisch aktivierbare Vernetzer zugesetzt werden. Die hierzu notwendige Erwärmung der Haftklebemasse kann mit Hilfe der vorbekannten Techniken erfolgen, insbesondere mit Hilfe von Hochtemperatur-Kanälen, aber auch mit Hilfe von Infrarot-Strahlern oder mittels hochfrequenter magnetischer Wechselfelder, beispielsweise HF- UHF- oder Mikrowellen. Eine thermische Vernetzung ist besonders interessant im Fall von ESH-sensiblen Trägern. ESH-, UV- und thermische Vernetzung können auch kombiniert werden.

Es kann ein Haftklebeband unter Verwendung einer nach dem erfindungsgemäßen Verfahren herstellbaren Haftklebemasse hergestellt werden, indem auf ein bahnförmiges Material zumindest einseitig, gegebenenfalls auch beidseitig, die Haftklebemasse aufgetragen wird.

Unter Verwendung der Haftklebemasse lassen sich somit sowohl einseitig klebende, d.h. einseitige, als auch beidseitig klebende, d.h. doppelseitige Haftklebebänder herstellen. Wird die Haftklebemasse einseitig auf einen permanenten Träger aufgetragen, so ergibt sich ein einseitiges Klebeband. Wird die Haftklebemasse beidseitig auf einen permanenten Träger aufgetragen, so ergibt sich ein doppelseitiges Klebeband. Alternativ lässt sich ein solches einseitiges Haftklebeband auch herstellen, indem die Haftklebemasse auf einen Liner aufgebracht wird, und die sich ergebende Haftklebemasseschicht anschließend auf den permanenten Träger kaschiert wird. Ein solches doppelseitiges Haftklebeband lässt sich alternativ auch herstellen, indem die Haftklebemasse auf einen Liner aufgebracht wird, und die sich ergebende Haftklebemasseschicht anschließend beidseitig auf den permanenten Träger kaschiert wird. Nachdem die Haftklebemasse auf einen Liner aufgebracht worden ist, kann die sich ergebende Haftklebemasseschicht alternativ auf einen weiteren Liner kaschiert werden. Ein solches einschichtiges, beidseitig selbstklebendes Klebeband, d.h. doppelseitiges Klebeband, wird auch als "Transfertape" bezeichnet.

Die Dicke der Haftklebemasse auf dem bahnförmigen Material kann typischerweise zwischen 10 µm und 5000 µm betragen, vorzugsweise beträgt sie zwischen 15 µm und 150 µm. In einem Transfertape beträgt die Dicke der Haftklebemasse außerdem vorzugsweise 800 µm bis 1200 µm. Ein derartiges Transfertape ist, insbesondere nach Vernetzung, vielseitig anwendbar.

Das Haftklebeband ist insbesondere im Elektronikbereich einsetzbar. Mit zunehmender Verbreitung von elektronischen Geräten steigen die Anwendungsgebiete derselben. Daraus ergeben sich auch wachsende Anforderungen an die verbauten Komponenten. So wird es durch die Entwicklung von am Körper getragenen elektronischen Geräten (so genannte Wearables) wie etwa Smart-Watches immer wichtiger, dass die dort verwendeten Verklebungen eine hohe Resistenz gegenüber verschiedenen Chemikalien aufweisen und auch nach längerer Lagerung in verschiedenen Medien keine Klebkraft verlieren. Ähnliche Anforderungen werden auch vermehrt an andere elektronische Geräte wie Smartphones (Mobiltelefone), Tablets, Notebooks, Kameras, Videokameras, Tastauren, Touchpads und ähnliches gestellt.

Elektronische, optische und feinmechanische Geräte im Sinne dieser Anmeldung sind insbesondere solche Geräte, wie sie in Klasse 9 der Internationalen Klassifikation von Waren und Dienstleistungen für die Eintragung von Marken (Klassifikation von Nizza), 10. Ausgabe (NCL(10-2013)), einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere
- Wissenschaftliche, Schifffahrts-, Vermessungs-, fotografische, Film-, optische, Wäge-, Mess-, Signal-, Kontroll-, Rettungs- und Unterrichtsapparate und -instrumente,
- Apparate und Instrumente zum Leiten, Schalten, Umwandeln, Speichern, Regeln und Kontrollieren von Elektrizität,
- Bildaufzeichnungs-, -verarbeitungs-, -übertragungs- und -wiedergabegeräte, wie beispielweise Fernseher und dergleichen,
- Akustische Aufzeichnungs-, Verarbeitungs-, -übertragungs- und -wiedergabegeräte, wie beispielsweise Rundfunkgeräte und dergleichen,
- Computer, Rechengeräte und Datenverarbeitungsgeräte, mathematische Geräte und Instrumente, Computerzubehör, Bürogeräte wie beispielsweise Drucker, Faxgeräte, Kopiergeräte, Schreibmaschinen, Datenspeichergeräte,
- Fernkommunikations- und Multifunktionsgeräte mit Fernkommunikationsfunktion, wie beispielweise Telefone, Anrufbeantworter,
- Chemische und physikalische Messgeräte, Steuergeräte und Instrumente, wie beispielweise Akkumulatorladegeräte, Multimeter, Lampen, Tachometer,
- Nautische Geräte und Instrumente,
- Optische Geräte und Instrumente,
- Medizinische Geräte und Instrumente und solche für Sportler,
- Uhren und Chronometer,
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen und chemischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärker Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden. Die beschriebene Klebemasse hat sich als besonders bevorzugt herausgestellt, solche Störeinflüsse zu überstehen und im Idealfall auch abzuschwächen oder zu kompensieren.

Die Erfindung bezieht sich dementsprechend besonders bevorzugt auf Mobilgeräte, da die eingesetzte Klebemasse hier aufgrund ihrer unerwartet guten Eigenschaften einen besonderen Nutzen hat. Nachfolgend sind einige portable Geräte aufgeführt, ohne sich durch die konkret genannten Vertreter in dieser Liste bezüglich dem Gegenstand der Erfindung unnötig beschränken zu wollen:
- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte wie Mäuse,
- Zeichenpads, Grafiktabletts, Mikrophone, Lautsprecher, Spielkonsolen, Gamepads,
- Fernsteuerungen, Fernbedienungen, Tastfelder ("Touchpads"),
- Monitore, Displays, Bildschirme, berührungsempfindliche Bildschirme (Sensorbildschirme, "Touchscreen-Geräte"), Beamer,
- Lesegeräte für elektronische Bücher ("E-Books"),
- Kleinfernsehgeräte, Taschenfernseher, Filmabspielgeräte, Videoabspielgeräte, Radios (auch Klein- und Taschenrundfunkgeräte), Walkmen, Discmen, Musikabspielgeräte für zum Beispiel CD, DVD, Bluray, Kassetten, USB, MP3, Kopfhörer, Schnurlose Telefone, Mobiltelefone, Smartphones, Funksprechgeräte, Freisprechgeräte, Personenrufgeräte (Pager, Pieper),
- Mobile Defibrillatoren, Blutzuckermessgeräte, Blutdruckmessgeräte, Schrittzähler, Pulsmesser
- Taschenlampen, Laserpointer,
- Mobile Detektoren, optische Vergrößerungsgeräte, Fernsichtgeräte, Nachtsichtgeräte, GPS-Geräte, Navigationsgeräte, tragbare Schnittstellengeräte der Satellitenkommunikation
- Datenspeichergeräte (USB-Sticks, externe Festplatten, Speicherkarten),
- Armbanduhren, Digitaluhren, Taschenuhren, Kettenuhren, Stoppuhren.

Ein weiterer Bereich, in dem die chemikalienbeständige Verklebung von Bedeutung ist, ist die Verklebung von Etiketten oder Labels zum Beispiel in Umgebungen, in denen der Kontakt mit Chemikalien möglich ist, wie zum Beispiel dem Motorraum, oder dort, wo eine Manipulationssicherheit des Etiketts auch bei Anwendungen von verschiedenen Chemikalien gewährleistet sein muss.

Nachfolgend wird die Erfindung durch Beispiele näher erläutert. Anhand der nachfolgend beschriebenen Beispiele werden besonders vorteilhafte Ausführungen der Erfindung näher erläutert, ohne damit die Erfindung unnötig einschränken zu wollen.

### Beispiele

Die eingesetzten Rohstoffe sind wie folgt charakterisiert:

| | |
|---|---|
| Nipol 401: | fester kaltpolymerisierter Acrylnitril-Butadien-Kautschuk mit einem Acrylnitrilgehalt von 18,5 Gew.-%, einer Mooney-Viskosität ( ML 1+4 bei 100 °C, gemäß der DIN 53523) von 73 bis 83 und einem T_{g} von -53 °C. |
| Nipol N 917: | fester kaltpolymerisierter Acrylnitril-Butadien-Kautschuk mit einem Acrylnitrilgehalt von 23,0 Gew.-%, einer Mooney-Viskosität ( ML 1+4 |
| | bei 100 °C, gemäß der DIN 53523) von 55 bis 70 und einem T_{g} von -42 °C. |
| Dertophene T: | Terpenphenolharz mit einem Erweichungspunkt von 95 °C und einem DACP von - 56 °C. |
| Picco AR 100: | modifiziertes C9-Harz mit einem Erweichungspunkt von 100 °C und einem DACP von - 86 °C. |

Verwendet wurde ein Planetwalzenextruder der Firma Entex Rust & Mitschke mit vier gekoppelten Walzenzylindern, die einen Innendurchmesser von 70 mm aufwiesen. Die ersten beiden Walzenzylinder waren mit jeweils 7 Planetenspindeln bestückt, die zwei nachfolgenden mit jeweils 6 Planetenspindeln. Der Dispergierring nach dem ersten Walzenzylinder hatte einen freien Querschnitt von 33,4 mm, der Dispergierring nach dem zweiten Walzenzylinder einen von 34 mm und der Dispergierring nach dem dritten Walzenzylinder einen von 38 mm. In der vorliegenden Ausführungsform des Planetwalzenextruders weist das Füllteil eine Förderschnecke auf, auf die das Material dosiert werden kann. Die Drehzahl der Zentralspindel betrug in den Versuchen jeweils 90 Umdrehungen pro Minute. Als Temperiermedium für die Zentralspindel und des Einfüllbereichs wurde in den Versuchen jeweils Wasser mit einer Vorlauftemperatur von 30 °C verwendet. Die Wandungstemperatur der Walzenzylinder wurde in den Versuchen jeweils variiert.

### Beispiel 1:

Der feste Acrylnitril-Butadien-Kautschuk Nipol 401 in einer Menge von 20 kg/h und eine erste Klebharzfraktion in Form von 20 phr festem raumtemperiertem Dertophene T (d.h. die zugegebene Menge an Dertophene T betrug 4 kg/h) wurden über einen Trichter in den Füllteil des Planetwalzenextruders aufgegeben. Die Wandungstemperatur der Walzenzylinder des Planetwalzenextruders betrug 110 °C. Die Mischung wurde aus dem Füllteil in den Compoundierteil übergeben. Eine zweite Klebharzfraktion in Form von 80 phr flüssigem Dertophene T (d.h. die zugegebene Menge an Dertophene T betrug 16 kg/h) einer Temperatur von 125 °C wurde über einen Seitenbeschicker in den zweiten Walzenzylinder des Compoundierteils zugegeben. Die sich ergebende Haftklebemasse wies am Austritt des Planetwalzenextruders eine Temperatur von 120 °C auf.

Die Haftklebemasse wurde anschließend zu einer Schichtdicke von 25 µm auf einen 23 µm dicken mit Trichloressigsäure geätzten PET-Träger ausgeformt. Die Beschichtung des PET-Trägers erfolgte dabei mit einem 3-Walzenauftragswerk aus zwei Masseauftragswalzen und einer Kühlwalze, wobei die erste Masseauftragswalze eine Temperatur von 130 °C aufwies, die zweite Masseauftragswalze eine Temperatur von 110 °C aufwies und die Kühlwalze eine Temperatur von weniger als 10 °C aufwies. Anschließend wurde der Verbund aus dem PET-Träger und der ersten Haftklebemasseschicht inklusive Linerabdeckung noch auf der offenen Seite wie zuvor beschrieben ebenfalls mit 25 µm der vorstehend genannten Haftklebmasse beschichtet, so dass sich ein doppelseitiges Haftklebeband ergab.

Zur Prüfung auf Homogenität wurden etwa 5 g der Haftklebemasse nach Austritt aus dem Planetwalzenextruder entnommen und zwischen zwei Prozesslinern mithilfe einer Heißpresse bei 110°C und 5 bar Druck verpresst. Als Prozessliner wurden dabei beidseitig mit unterschiedlich abgestuften Silikonsystemen beschichtete PET-Folien einer Dicke von 75 µm eingesetzt. Nach dem Abkühlen wurde der Pressling auseinandergezogen, so dass sich eine Dicke der Haftklebemasseschicht von etwa 50 µm ergab. Die Schicht wurde vor eine Lampe gehalten, wobei auf einer Fläche von 100 cm² mit dem Auge weder unaufgeschlossene Kautschuk-Partikel, noch nicht eingearbeitetes Klebharz zu sehen waren. Die Haftklebemasse wies somit eine hervorragende Homogenität auf.

### Beispiel 2:

Die Haftklebemasse und das doppelseitige Haftklebeband wurden wie in Beispiel 1 beschrieben hergestellt, wobei die erste feste Klebharzfraktion über einen Seitenbeschicker in den ersten Walzenzylinder zugegeben wurde. Die sich ergebende Haftklebemasse wies am Austritt des Planetwalzenextruders eine Temperatur von 125 °C auf.

Im analog zu Beispiel 1 durchgeführten Test auf Homogenität waren in der Haftklebemasseschicht mit dem Auge ebenfalls weder unaufgeschlossenen Kautschuk-Partikel, noch nicht eingearbeitetes Klebharz zu sehen, d.h. die Haftklebemasse wies eine hervorragende Homogenität auf.

### Beispiel 3:

Die Haftklebemasse und das doppelseitige Haftklebeband wurden wie in Beispiel 2 beschrieben hergestellt, wobei die Haftklebemasse auf beiden Seiten des PET-Trägers mit einer Schichtdicke von jeweils 50 µm aufgebracht wurde.

### Vergleichsbeispiele 4 und 5:

Beispiel 1 wurde wiederholt, allerdings mit einer Wandungstemperatur der Walzenzylinder von 160 °C (Vergleichsbeispiel 4) bzw. 140 °C (Vergleichsbeispiel 5). Die Masse wies am Austritt des Planetwalzenextruders eine Temperatur von 180 °C (Vergleichsbeispiel 4) bzw. 170 °C (Vergleichsbeispiel 5) auf und war jeweils schwarz bzw. verkohlt.

### Beispiel 6:

Beispiel 1 wurde wiederholt, allerdings mit einer Wandungstemperatur der Walzenzylinder von 130 °C.

Im analog zu Beispiel 1 durchgeführten Test auf Homogenität waren in der Haftklebemasseschicht mit dem Auge ebenfalls weder unaufgeschlossenen Kautschuk-Partikel, noch nicht eingearbeitetes Klebharz zu sehen, d.h. die Haftklebemasse wies eine hervorragende Homogenität auf.

### Vergleichsbeispiel 7:

Abweichend von Beispiel 2 wurden in den ersten Walzenzylinder des Compoundierteils über einen Seitenbeschicker 100 phrflüssiges Dertophene T (d.h. die zugegebene Menge an Dertophene T betrug 20 kg/h) einer Temperatur von 125 °C zugegeben. Weiteres Klebharz wurde nicht zugegeben. Die Masse wies am Austritt des Planetwalzenextruders eine Temperatur von 115 °C auf. Es handelte sich nicht um eine homogene Haftklebmasse. Vielmehr schwamm eine Kautschuk-basierte Klebmasse in nicht eingearbeitetem Klebharz.

### Vergleichsbeispiel 8:

Nipol 401 und Dertophene T wurden wie in den vorgenannten Beispielen im Gewichtsverhältnis von 1:1 zu einer Haftklebemasse verarbeitet, allerdings mittels eines Lösungsmittelverfahrens. Dabei wurden Nipol 401 und Dertophene T als lösungsmittelbasierte Masse in einem Kneter mit Doppelsigmaknethaken homogenisiert. Als Lösungsmittel wurde Methylethylketon verwendet. Der Kneter wurde dabei mittels Wasserkühlung gekühlt. In einem ersten Schritt wurde zunächst Nipol 401 mit der gleichen Menge Methylethylketon für 12 Stunden bei 23 °C vorgequollen. Anschließend wurde dieser sogenannte Vorbatch für 2 Stunden geknetet. Anschließend wurde das Klebharz Dertophene T als Lösung in Methylethylketon mit einem Feststoffgehalt von 50 Gew.-% zugegeben und weitere 20 min homogen geknetet. Der finale Feststoffgehalt der Haftklebemasse wurde durch Zugabe von Methylethylketon auf 30 Gew.-% eingestellt.

Die sich ergebende Haftklebemasse wurde anschließend auf einem handelsüblichen Laborstreichtisch (zum Beispiel von der Firma SMO (Sondermaschinen Oschersleben GmbH)) mit Hilfe eines Streichmessers auf einen 23 µm dicken mit Trichloressigsäure geätzten PET-Träger beschichtet. Das Methylethylketon wurde bei 105 °C im Umlufttrockenschrank für 10 Minuten abgedampft und somit die Haftklebemasse getrocknet. Die Spaltbreite beim Beschichten wurde so eingestellt, dass nach dem Abdampfen des Lösungsmittels eine Dicke der Haftklebemassenschicht von 25 µm erreicht wurde. Anschließend wurde eine weitere Haftklebemasseschicht mit 25 µm auf die andere Seite des Trägers kaschiert.

### Vergleichsbeispiel 9:

Vergleichsbeispiel 9 unterscheidet sich von Vergleichsbeispiel 8 lediglich dadurch, dass die Spaltbreite beim Beschichten so eingestellt wurde, dass nach dem Abdampfen des Lösungsmittels eine Dicke der Haftklebemassenschichten von jeweils 50 µm erreicht wurde.

### Beispiel 10:

Beispiel 1 wurde wiederholt, allerdings wurde als fester Acrylnitril-Butadien-Kautschuk Nipol N 917 eingesetzt (bei unveränderter Menge), und als Klebharz wurde Picco AR 100 eingesetzt, und zwar 20 phr als erste Klebharzfraktion und 30 phr als zweite Klebharzfraktion.

Im analog zu Beispiel 1 durchgeführten Test auf Homogenität waren in der Haftklebemasseschicht mit dem Auge ebenfalls weder unaufgeschlossenen Kautschuk-Partikel, noch nicht eingearbeitetes Klebharz zu sehen, d.h. die Haftklebemasse wies eine hervorragende Homogenität auf.

### Ergebnisse:

Die Beispiele 1 bis 3 und 6 zeigen, dass eine Haftklebemasse auf Basis von festem Acrylnitril-Butadien-Kautschuk unter Verwendung eines Planetwalzenextruders lösemittelfrei hergestellt werden kann, die gleichzeitig homogen und nicht verkohlt ist, sofern man einen erfindungsgemäßen Harzsplit sowie eine (Wandungs)Temperatur der Walzenzylinder und der Zentralspindel des Planetwalzenextruders von weniger als 140 °C wählt. Wählt man die Wandungstemperatur der Walzenzylinder zu hoch, ergibt sich dagegen eine schwarze, verkohlte Masse, siehe die Vergleichsbeispiele 4 und 5. Verzichtet man auf einen Harzsplit, d.h. gibt man das gesamte Klebharz in einer einzigen Charge zu, so lässt sich keine homogene Haftklebemasse herstellen, siehe Vergleichsbeispiel 7.

Überraschenderweise weisen außerdem die nach dem erfindungsgemäßen Verfahren hergestellten Haftklebemassen gegenüber Haftklebemassen vergleichbarer Zusammensetzung, die jedoch nach dem Lösemittelverfahren hergestellt sind, verbesserte Scherfestigkeiten auf. Dies zeigt beispielsweise ein Vergleich der Scherstandszeit des Haftklebebands aus Beispiel 2, die 500 Minuten beträgt, mit der Scherstandszeit des Haftklebebands aus Vergleichsbeispiel 8, die 300 Minuten beträgt, bzw. der Scherstandszeit des Haftklebebands aus Beispiel 3, die 360 Minuten beträgt, mit der Scherstandszeit des Haftklebebands aus Vergleichsbeispiel 9, die 190 Minuten beträgt (die Scherstandszeiten wurden jeweils wie im Prüfmethodenteil dieser Anmeldung angegeben ermittelt). Wie bereits vorstehend erläutert, wird vermutet, dass im erfindungsgemäßen PWE-Verfahren bei den Wandungstemperaturen von weniger als 140 °C zwar keine Verkohlung des Acrylnitril-Butadien-Kautschuks auftritt, aber jedenfalls eine Teilcyclisierung des Kautschuks, was in erhöhten Scherfestigkeiten mündet. Die erhöhten Scherfestigkeiten könnten alternativ darauf beruhen, dass die Wechselwirkungen zwischen den Acrylnitrilgruppen des Kautschuks im erfindungsgemäßen Extrudierverfahren möglicherweise nicht oder nur unvollständig aufgebrochen werden.

Die Klebkräfte der nach dem erfindungsgemäßen Verfahren hergestellten Haftklebemassen sind außerdem mit den Klebkräften von Haftklebemassen vergleichbarer Zusammensetzung, die jedoch nach dem Lösemittelverfahren hergestellt sind, vergleichbar. Dies gilt sowohl für polare Untergründe wie zum Beispiel Stahl, als auch für unpolare Untergründe wie zum Beispiel Polyethylen. Dies zeigt beispielsweise ein Vergleich der 180 ° Klebkraft des Haftklebebands aus Beispiel 2, die auf Stahl 8,0 N/cm beträgt, mit der 180 ° Klebkraft des Haftklebebands aus Vergleichsbeispiel 8, die auf Stahl 9,0 N/cm beträgt, bzw. der 180 ° Klebkraft des Haftklebebands aus Beispiel 3, die auf Stahl 14,5 N/cm und auf Polyethylen 5,6 N/cm beträgt, mit der 180 ° Klebkraft des Haftklebebands aus Vergleichsbeispiel 9, die auf Stahl 15,0 N/cm und auf Polyethylen 7,3 N/cm beträgt (die Klebkräfte wurden jeweils wie im Prüfmethodenteil dieser Anmeldung angegeben ermittelt).

Außerdem weisen die Haftklebemassen aus den Beispielen 1 und 2 vergleichbare Klebkräfte und Mikroscherwege auf. So ist das Haftklebeband aus Beispiel 1 durch Klebkräfte auf Stahl bzw. Polypropylen von 8,0 N/cm bzw. 4,5 N/cm und durch einen Mikroscherweg von 280 µm gekennzeichnet. Das Haftklebeband aus Beispiel 2 ist durch Klebkräfte auf Stahl bzw. Polypropylen von 8,0 N/cm bzw. 5,0 N/cm und durch einen Mikroscherweg von 300 µm gekennzeichnet (wie jeweils im Prüfmethodenteil angegeben ermittelt). Gute Klebkräfte und Scherfestigkeiten lassen sich somit im erfindungsgemäßen Verfahren unabhängig davon erzielen, ob die erste Klebharzfraktion zusammen mit dem festen Acrylnitril-Butadien-Kautschuk in den Füllteil des Planetwalzenextruders aufgegeben wird oder aber in den ersten Walzenzylinder des Compoundierteils zugegeben wird.

### Prüfmethoden

Alle Messungen wurden, sofern nichts anderes angegeben ist, bei 23 °C und 50 % rel. Luftfeuchtigkeit durchgeführt. Die mechanischen und klebtechnischen Daten wurden wie folgt ermittelt:

### Erweichungspunkt T_{E}

Die Angaben zum Erweichungspunkt Tε, auch Erweichungstemperatur genannt, von oligomeren Verbindungen, polymeren Verbindungen bzw. Harzen beziehen sich auf das Ring-Kugel-Verfahren gemäß DIN EN 1427:2007 bei entsprechender Anwendung der Bestimmungen (Untersuchung der Oligomer- Polymer- bzw. Harzprobe statt Bitumens bei ansonsten beibehaltener Verfahrensführung); die Messungen erfolgen im Glycerolbad.

### Glasübergangstemperatur (T_{g})

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765; insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

### Dicke

Die Dicke einer Klebemasseschicht kann durch Bestimmung der Dicke eines bezüglich seiner Länge und seiner Breite definierten Abschnitts einer solchen auf einen Träger aufgetragenen Klebemassenschicht bestimmt werden, abzüglich der (bekannten oder separat ermittelbaren) Dicke eines Abschnitts gleicher Dimensionen des verwendeten Trägers. Die Dicke der Klebemasseschicht lässt sich über handelsübliche Dickenmessgeräte (Taster-Prüfgeräte) mit Genauigkeiten von weniger als 1 µm Abweichung ermitteln. In der vorliegenden Anmeldung wird das Präzisions-Dickenmessgerät Mod. 2000 F eingesetzt, das einen kreisrunden Taster mit einem Durchmesser von 10 mm (plan) aufweist. Die Messkraft beträgt 4 N. Der Wert wird 1 s nach Belastung abgelesen. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

### 180 ° Klebkraft

Die Prüfung der Schälfestigkeit (Klebkraft) erfolgt in Anlehnung an PSTC-1.

Ein 2,0 cm breiter Streifen eines Haftklebebandes wird auf dem Prüfuntergrund in Form einer ASTM-Stahlplatte durch fünfmaliges doppeltes Überrollen mittels einer 4 kg Rolle verklebt.

Die Oberfläche der Stahlplatte wird zuvor mit Aceton gereinigt. Die Platte wird eingespannt, und der Haftklebestreifen über sein freies Ende an einer Zugprüfmaschine unter einem Schälwinkel von 180° mit einer Geschwindigkeit von 300 mm/min abgezogen, und die dafür notwendige Kraft ermittelt. Die Messergebnisse werden über drei Messungen gemittelt und normiert auf die Breite des Streifens in N/cm angegeben.

Die Klebkraft auf alternativen Substraten (bspw. Polypropylen (PP) oder Polyethylen (PE)) wird entsprechend der obigen Methodik durch Wechsel des Verklebungssubstrates bestimmt. Die Substratuntergründe Polyethylen und -propylen werden vor der Verwendung mit Ethanol gereinigt und für 2 h im Prüfklima konditioniert.

### Mikroscherweg

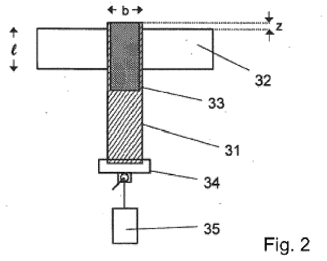

Die Messanordnung ist in Fig. 2 illustriert. Aus dem zu untersuchenden Haftklebeband wird ein 10 mm × 50 mm großes Flächenstück geschnitten und das so erhaltene Klebebandmuster (31) derart auf eine polierte, temperierbare, mit Aceton gereinigte 13 mm breite Stahl-Prüfplatte (32) verklebt, dass die Längsrichtung des Klebebandmusters in Querrichtung der Stahlplatte ausgerichtet ist, die Verklebungsfläche die Dimensionen l × b = 13 mm × 10 mm beträgt und das Klebeband die Stahlplatte auf einer Seite um ein Stück der Länge z = 2 mm überragt. Zur Fixierung wird das Klebeband anschließend mit einer 2 kg-Stahlrolle und einer Geschwindigkeit von 10 m/min sechsmal überrollt. Auf der der Stahlplatte (32) abgewandten Seite des Klebebandes (31) wird das Klebeband (31) bündig mit der die Stahlplatte um das Stück der Länge z überragenden Kante mit einem stabilen Klebestreifen (33) (Dimensionen 4 mm × 25 mm; Träger 190 µm dicke PET-Folie) verstärkt, der als Auflage für einen Wegmessfühler dient. Die so vorbereitete Anordnung wird derart senkrecht aufgehängt, dass das die Stahlplatte (32) überragende Stück der Länge z des Klebebandmusters (31) nach oben zeigt. Die Stahl-Prüfplatte (32) mit der verklebten Probe (31) wird auf 40 °C temperiert und das zu vermessende Klebebandmuster (31) am unteren Ende mittels einer Klammer (34) zum Zeitpunkt t₀ = 0 mit einem Gewicht (35) von 300 g belastet. Gemessen mittels des Wegmessfühlers wird die Deformation der Probe unter Scherung über einen Zeitraum von 15 Minuten (beginnend bei t₀) bei einer Temperatur von 40 °C und einer relativen Luftfeuchtigkeit von 50 ± 5 %. Angegeben wird die Scherstrecke nach 15 min (Maximalwert; während der Messung nach unten zurückgelegter Weg der oberen Kante der Probe) als Ergebnis in µm. Der so gemessene Scherweg ist ein quantitatives Maß für die innere Festigkeit (Scherfestigkeit) der vermessenen Probe.

### Scherstandszeit

Die Musterpräparation erfolgt in einem Prüfklima von 23 °C +/- 1 °C Temperatur und 50 % +/- 5 % rel. Luftfeuchte. Das Klebeband wird auf 13 mm zugeschnitten und auf eine Stahlplatte geklebt. Die Verklebungsfläche beträgt 20 mm × 13 mm (Länge × Breite). Vor der Messung wird die Stahlplatte gereinigt und konditioniert. Dazu wird die Platte zunächst mit Aceton abgewischt und danach 5 Minuten an der Luft liegen gelassen, damit das Lösungsmittel abdampfen kann. Nach dem Verkleben wird die offene Seite mit einer 50 µm Aluminiumfolie verstärkt und mit einer 2 kg-Rolle zweimal hin und her überrollt. Anschließend wird eine Gurtschlaufe am überstehenden Ende des Verbundes angebracht. Das Ganze wird dann an einer geeigneten Vorrichtung aufgehängt und mit einem Gewicht von 1 kg belastet. Die Aufhängvorrichtung ist so beschaffen, dass das Gewicht die Probe in einem Winkel von 179°+/-1° belastet. Dadurch wird sichergestellt, dass sich der Dreischichtverbund nicht von der Plattenunterkante abschälen kann. Die gemessene Scherstandszeit, d.h. die Zeit zwischen Aufhängen und Abfallen des Musters ist in Minuten angegeben und entspricht dem Mittelwert aus drei Messungen. Die so gemessene Scherstandszeit ist ein quantitatives Maß für die innere Festigkeit (Scherfestigkeit) der vermessenen Probe.

### DACP

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

## Patentansprüche

1. Verfahren zur kontinuierlichen und lösungsmittelfreien Herstellung einer Haftklebemasse auf Basis von festem Acrylnitril-Butadien-Kautschuk, die 30 bis 160 phr Klebharz enthält, in einem kontinuierlich arbeitenden Aggregat in Form eines Planetwalzenextruders mit einem Füllteil und einem Compoundierteil, wobei der Compoundierteil aus mindestens zwei gekoppelten Walzenzylindern besteht, bei dem
a) der feste Acrylnitril-Butadien-Kautschuk, eine erste Klebharzfraktion in Form von 10 bis weniger als 100 phr Klebharz und gegebenenfalls weitere Komponenten in den Füllteil des Planetwalzenextruders aufgegeben werden,
b) die Komponenten aus dem Füllteil in den Compoundierteil übergeben werden,
c) eine zweite Klebharzfraktion und gegebenenfalls weitere Komponenten in den zweiten Walzenzylinder des Compoundierteils oder einen Walzenzylinder stromabwärts davon zugegeben werden,
d) optional eine weitere Klebharzfraktion und gegebenenfalls weitere Komponenten in mindestens einen weiteren Walzenzylinder stromabwärts zugegeben werden, und
e) die sich ergebende Haftklebemasse, die wie vorstehend definiert ist, ausgetragen wird,
**dadurch gekennzeichnet, dass**
die Wandungstemperatur der Walzenzylinder und die Temperatur der Zentralspindel des Planetwalzenextruders jeweils weniger als 140 °C beträgt.

2. Verfahren zur kontinuierlichen und lösungsmittelfreien Herstellung einer Haftklebemasse auf Basis von festem Acrylnitril-Butadien-Kautschuk, die 30 bis 160 phr Klebharz enthält, in einem kontinuierlich arbeitenden Aggregat in Form eines Planetwalzenextruders mit einem Füllteil und einem Compoundierteil, wobei der Compundierteil aus mindestens zwei gekoppelten Walzenzylindern besteht, bei dem
a) der feste Acrylnitril-Butadien-Kautschuk und gegebenenfalls weitere Komponenten in den Füllteil des Planetwalzenextruders aufgegeben werden,
b) die Komponenten aus dem Füllteil in den Compoundierteil übergeben werden,
c) eine erste Klebharzfraktion in Form von 10 bis weniger 100 phr Klebharz und gegebenenfalls weitere Komponenten in den ersten Walzenzylinder des Compoundierteils zugegeben werden,
d) eine zweite Klebharzfraktion und gegebenenfalls weitere Komponenten in den zweiten Walzenzylinder des Compoundierteils oder einen Walzenzylinder stromabwärts davon zugegeben werden,
e) optional eine weitere Klebharzfraktion und gegebenenfalls weitere Komponenten in mindestens einen weiteren Walzenzylinder stromabwärts zugegeben werden, und
f) die sich ergebende Haftklebemasse, die wie vorstehend definiert ist, ausgetragen wird,
**dadurch gekennzeichnet, dass**
die Wandungstemperatur der Walzenzylinder und die Temperatur der Zentralspindel des Planetwalzenextruders jeweils weniger als 140 °C beträgt.

3. Verfahren nach Anspruch 1 oder Anspruch 2,
**dadurch gekennzeichnet,**
**dass** der Acrylnitrilgehalt in dem festen Acrylnitril-Butadien-Kautschuk zwischen 10 und 45 Gew.-% liegt, vorzugsweise zwischen 10 und 30 Gew.-%, bevorzugter zwischen 10 und 25 Gew.-%, und insbesondere zwischen 15 und 25 Gew.-%.

4. Verfahren nach einem der vorhergehenden Ansprüche,
**dadurch gekennzeichnet,**
**dass** die weiteren Komponenten Festkomponenten wie zum Beispiel Füllstoffe, Farbstoffe, Alterungsschutzmittel, Schäumungsmittel und/oder Vernetzer sind.

5. Verfahren nach einem der vorhergehenden Ansprüche,
**dadurch gekennzeichnet,**
**dass** die weiteren Komponenten Flüssigkomponenten wie zum Beispiel flüssiger Acrylnitril-Butadien-Kautschuk, Weichmacher und/oder Vernetzer sind.

6. Verfahren nach Anspruch 5,
**dadurch gekennzeichnet, dass**
der Acrylnitrilgehalt in dem flüssigen Acrylnitril-Butadien-Kautschuk vorzugsweise zwischen 10 und 45 Gew.-% liegt, bevorzugter zwischen 15 und 40 Gew.-%, noch bevorzugter zwischen 20 und 35 Gew.-%, und insbesondere zwischen 25 und 30 Gew.-%.

7. Verfahren nach einem der vorhergehenden Ansprüche,
**dadurch gekennzeichnet, dass**
in der Haftklebemasse der Anteil an festem Acrylnitril-Butadien-Kautschuk mindestens 40 Gew.-% beträgt, bezogen auf das Gesamtgewicht der Haftklebemasse.

8. Verfahren nach einem der vorhergehenden Ansprüche,
**dadurch gekennzeichnet, dass**
in der Haftklebemasse der Anteil an flüssigem Acrylnitril-Butadien-Kautschuk bis zu 30 phr, bevorzugter zwischen 1 und 20 phr und insbesondere zwischen 2 und 15 phr beträgt.

9. Verfahren nach einem der vorhergehenden Ansprüche,
**dadurch gekennzeichnet, dass**
das in der Haftklebemasse enthaltene Polymer zu mehr als 90 Gew.-%, vorzugsweise zu mehr als 95 Gew.-%, und insbesondere zu 100 Gew.-% fester und gegebenenfalls flüssiger Acrylnitril-Butadien-Kautschuk ist.

10. Verfahren nach einem der vorhergehenden Ansprüche,
**dadurch gekennzeichnet, dass**
die Haftklebemasse 50 bis 120 phr, vorzugsweise 80 bis 110 phr, wie zum Beispiel 100 phr Klebharz enthält.

11. Verfahren nach einem der vorhergehenden Ansprüche,
**dadurch gekennzeichnet, dass**
als erste Klebharzfraktion 10 bis 40 phr, vorzugsweise 15 bis 35 phr und insbesondere 20 bis 30 phr vorzugsweise festes Klebharz zugegeben werden.

12. Verfahren nach einem der vorhergehenden Ansprüche,
**dadurch gekennzeichnet, dass**
als zweite oder weitere Klebharzfraktion 10 bis 100 phr, vorzugsweise 20 bis 90 phr und insbesondere 30 bis 80 phr vorzugsweise flüssiges Klebharz zugegeben werden.

13. Verfahren nach einem der vorhergehenden Ansprüche,
**dadurch gekennzeichnet, dass**
als Klebharz Terpenphenolharz und/oder Polyterpen eingesetzt wird, vorzugsweise Terpenphenolharz.

14. Verfahren nach einem der vorhergehenden Ansprüche,
**dadurch gekennzeichnet, dass**
die Wandungstemperatur der Walzenzylinder 80 bis 120 °C, vorzugsweise 90 bis 110 °C beträgt.

15. Verfahren nach einem der vorhergehenden Ansprüche,
**dadurch gekennzeichnet, dass**
die Temperatur der Zentralspindel weniger als 20 °C beträgt, wobei die Zentralspindel typischerweise mit einem Medium wie zum Beispiel Wasser oder Öl gekühlt ist, und wobei die Zulauftemperatur des Mediums vorzugsweise 5 bis 18 °C und insbesondere 8 bis 15 °C beträgt.

16. Verfahren nach einem der vorhergehenden Ansprüche,
**dadurch gekennzeichnet, dass**
die Haftklebemasse am Austritt aus dem Planetwalzenextruder eine Temperatur von weniger als 170 °C, vorzugsweise von 90 bis 150 °C, bevorzugter von 110 °C bis 140 °C aufweist.

17. Verfahren nach einem der vorhergehenden Ansprüche,
**dadurch gekennzeichnet, dass**
die Haftklebemasse nach dem Austragen aus dem Planetwalzenextruder auf ein bahnförmiges Material beschichtet wird.

18. Verfahren nach Anspruch 17,
**dadurch gekennzeichnet, dass**
die Haftklebemasse in einem der Beschichtung nachfolgenden Schritt vernetzt wird, wobei die Haftklebemasse vorzugsweise ohne Promotoren mittels Elektronenstrahlen vernetzt wird.

## Claims

1. Process for the continuous and solvent-free production of a pressure-sensitive adhesive based on solid acrylonitrile-butadiene rubber comprising 30 to 160 phr of tackifier resin in a continuously operating assembly in the form of a planetary roller extruder having a filling section and a compounding section, the compounding section consisting of at least two coupled roller cylinders, by
a) feeding the solid acrylonitrile-butadiene rubber, a first tackifier resin fraction in the form of 10 to less than 100 phr of tackifier resin, and any further components into the filling section of the planetary roller extruder,
b) transferring the components from the filling section into the compounding section,
c) adding a second tackifier resin fraction and any further components into the second roller cylinder of the compounding section or a roller cylinder downstream thereof,
d) optionally adding a further tackifier resin fraction and any further components into at least one further roller cylinder downstream, and
e) discharging the resultant pressure-sensitive adhesive which is as defined above,
**characterized in that**
the wall temperature of the roller cylinders and the temperature of the central spindle of the planetary roller extruder are each less than 140°C.

2. Process for the continuous and solvent-free production of a pressure-sensitive adhesive based on solid acrylonitrile-butadiene rubber comprising 30 to 160 phr of tackifier resin in a continuously operating assembly in the form of a planetary roller extruder having a filling section and a compounding section, the compounding section consisting of at least two coupled roller cylinders, by
a) feeding the solid acrylonitrile-butadiene rubber and any further components into the filling section of the planetary roller extruder,
b) transferring the components from the filling section into the compounding section,
c) adding a first tackifier resin fraction in the form of 10 to less than 100 phr of tackifier resin and any further components into the first roller cylinder of the compounding section,
d) adding a second tackifier resin fraction and any further components into the second roller cylinder of the compounding section or a roller cylinder downstream thereof,
e) optionally adding a further tackifier resin fraction and any further components into at least one further roller cylinder downstream, and
f) discharging the resultant pressure-sensitive adhesive which is as defined above,
**characterized in that**
the wall temperature of the roller cylinders and the temperature of the central spindle of the planetary roller extruder are each less than 140°C.

3. Process according to Claim 1 or Claim 2,
**characterized**
**in that** the acrylonitrile content in the solid acrylonitrile-butadiene rubber is between 10 and 45 wt%, preferably between 10 and 30 wt%, more preferably between 10 and 25 wt%, and more particularly between 15 and 25 wt%.

4. Process according to any of the preceding claims,
**characterized**
**in that** the further components are solid components such as, for example, fillers, dyes, aging inhibitors, foaming agents and/or crosslinkers.

5. Process according to any of the preceding claims,
**characterized**
**in that** the further components are liquid components such as, for example, liquid acrylonitrile-butadiene rubber, plasticizers and/or crosslinkers.

6. Process according to Claim 5,
**characterized in that**
the acrylonitrile content in the liquid acrylonitrile-butadiene rubber is preferably between 10 and 45 wt%, more preferably between 15 and 40 wt%, more preferably still between 20 and 35 wt%, and more particularly between 25 and 30 wt%.

7. Process according to any of the preceding claims,
**characterized in that**
the fraction of solid acrylonitrile-butadiene rubber in the pressure-sensitive adhesive is at least 40 wt%, based on the total weight of the pressure-sensitive adhesive.

8. Process according to any of the preceding claims,
**characterized in that**
the fraction of liquid acrylonitrile-butadiene rubber in the pressure-sensitive adhesive is up to 30 phr, more preferably between 1 and 20 phr and more particularly between 2 and 15 phr.

9. Process according to any of the preceding claims,
**characterized in that**
the polymer contained in the pressure-sensitive adhesive is to an extent of more than 90 wt%, preferably more than 95 wt% and more particularly 100 wt% solid and optionally liquid acrylonitrile-butadiene rubber.

10. Process according to any of the preceding claims,
**characterized in that**
the pressure-sensitive adhesive comprises 50 to 120 phr, preferably 80 to 110 phr, such as, for example, 100 phr of tackifier resin.

11. Process according to any of the preceding claims,
**characterized in that**
the first tackifier resin fraction added comprises 10 to 40 phr, preferably 15 to 35 phr and more particularly 20 to 30 phr of preferably solid tackifier resin.

12. Process according to any of the preceding claims,
**characterized in that**
the second or further tackifier resin fraction added comprises 10 to 100 phr, preferably 20 to 90 phr and more particularly 30 to 80 phr of preferably liquid tackifier resin.

13. Process according to any of the preceding claims,
**characterized in that**
the tackifier resin used comprises terpene-phenol resin and/or polyterpene, preferably terpene-phenol resin.

14. Process according to any of the preceding claims,
**characterized in that**
the wall temperature of the roller cylinders is 80 to 120°C, preferably 90 to 110°C.

15. Process according to any of the preceding claims,
**characterized in that**
the temperature of the central spindle is less than 20°C, the central spindle being cooled typically with a medium such as, for example, water or oil, and the feed temperature of the medium being preferably 5 to 18°C and more particularly 8 to 15°C.

16. Process according to any of the preceding claims,
**characterized in that**
the pressure-sensitive adhesive at the exit from the planetary roller extruder has a temperature of less than 170°C, preferably of 90 to 150°C, more preferably of 110°C to 140°C.

17. Process according to any of the preceding claims,
**characterized in that**
the pressure-sensitive adhesive after discharge from the planetary roller extruder is coated onto a material in web form.

18. Process according to Claim 17,
**characterized in that**
the pressure-sensitive adhesive is crosslinked in a step downstream of the coating operation, the pressure-sensitive adhesive being crosslinked preferably without promoters by means of electron beams.

## Revendications

1. Procédé de préparation en continu et sans solvant d'une masse autoadhésive à base de caoutchouc d'acrylonitrile-butadiène solide, qui contient 30 à 160 phr de résine adhésive, dans un agrégat travaillant en continu sous forme d'une extrudeuse à vis planétaire comportant un élément de remplissage et un élément de compoundage, l'élément de compoundage étant constitué d'au moins deux cylindres de laminage couplés, dans lequel
a) le caoutchouc d'acrylonitrile-butadiène solide, une première fraction de résine adhésive sous forme de 10 à moins de 100 phr de résine adhésive et éventuellement d'autres composants sont chargés dans l'élément de remplissage de l'extrudeuse à vis planétaire,
b) les composants sont transférés depuis l'élément de remplissage dans l'élément de compoundage,
c) une deuxième fraction de résine adhésive et éventuellement d'autres composants sont ajoutés dans le deuxième cylindre de laminage de l'élément de compoundage ou dans un cylindre de laminage en aval de celui-ci,
d) éventuellement une fraction de résine adhésive supplémentaire et éventuellement d'autres composants sont ajoutés dans au moins un cylindre de laminage supplémentaire en aval, et
e) la masse autoadhésive produite, qui est définie comme précédemment, est déchargée,
**caractérisé en ce que** la température de paroi des cylindres de laminage et la température de la broche centrale de l'extrudeuse à vis planétaire sont à chaque fois inférieures à 140 °C.

2. Procédé de préparation en continu et sans solvant d'une masse autoadhésive à base de caoutchouc d'acrylonitrile-butadiène solide, qui contient 30 à 160 phr de résine adhésive, dans un agrégat travaillant en continu sous forme d'une extrudeuse à vis planétaire comportant un élément de remplissage et un élément de compoundage, l'élément de compoundage étant constitué d'au moins deux cylindres de laminage couplés, dans lequel
a) le caoutchouc d'acrylonitrile-butadiène solide et éventuellement d'autres composants sont chargés dans l'élément de remplissage de l'extrudeuse à vis planétaire,
b) les composants sont transférés depuis l'élément de remplissage dans l'élément de compoundage,
c) une première fraction de résine adhésive sous forme de 10 à moins de 100 phr de résine adhésive et éventuellement d'autres composants sont ajoutés dans le premier cylindre de laminage de l'élément de compoundage,
d) une deuxième fraction de résine adhésive et éventuellement d'autres composants sont ajoutés dans le deuxième cylindre de laminage de l'élément de compoundage ou dans un cylindre de laminage en aval de celui-ci,
e) éventuellement une fraction de résine adhésive supplémentaire et éventuellement d'autres composants sont ajoutés dans au moins un cylindre de laminage supplémentaire en aval, et
f) la masse autoadhésive produite, qui est définie comme précédemment, est déchargée,
**caractérisé en ce que**
la température de paroi des cylindres de laminage et la température de la broche centrale de l'extrudeuse à vis planétaire sont à chaque fois inférieures à 140 °C.

3. Procédé selon la revendication 1 ou la revendication 2,
**caractérisé en ce que**
la teneur en acrylonitrile dans le caoutchouc d'acrylonitrile-butadiène solide se situe entre 10 et 45 % en poids, de préférence entre 10 et 30 % en poids, plus préférablement entre 10 et 25 % en poids, et en particulier entre 15 et 25 % en poids.

4. Procédé selon l'une quelconque des revendications précédentes, **caractérisé en ce que** les autres composants sont des composants solides comme par exemple des matières de charge, des matières colorantes, des agents de protection contre le vieillissement, des agents moussants et/ou des agents de réticulation.

5. Procédé selon l'une quelconque des revendications précédentes, **caractérisé en ce que** les autres composants sont des composants liquides comme par exemple un caoutchouc d'acrylonitrile-butadiène liquide, des plastifiants et/ou des agents de réticulation.

6. Procédé selon la revendication 5, **caractérisé en ce que** la teneur en acrylonitrile dans le caoutchouc d'acrylonitrile-butadiène liquide se situe de préférence entre 10 et 45 % en poids, préférablement entre 15 et 40 % en poids, plus préférablement entre 20 et 35 % en poids, et en particulier entre 25 et 30 % en poids.

7. Procédé selon l'une quelconque des revendications précédentes, **caractérisé en ce que** dans la masse autoadhésive, la proportion de caoutchouc d'acrylonitrile-butadiène solide est d'au moins 40 % en poids, par rapport au poids total de la masse autoadhésive.

8. Procédé selon l'une quelconque des revendications précédentes, **caractérisé en ce que** dans la masse autoadhésive, la proportion de caoutchouc d'acrylonitrile-butadiène liquide est jusqu'à 30 phr, préférablement entre 1 et 20 phr et en particulier entre 2 et 15 phr.

9. Procédé selon l'une quelconque des revendications précédentes, **caractérisé en ce que** le polymère contenu dans la masse autoadhésive est composé de plus de 90 % en poids, de préférence de plus de 95 % en poids, et en particulier de 100 % en poids de caoutchouc d'acrylonitrile-butadiène solide et éventuellement liquide.

10. Procédé selon l'une quelconque des revendications précédentes, **caractérisé en ce que** la masse autoadhésive contient 50 à 120 phr, de préférence 80 à 110 phr, comme par exemple 100 phr de résine adhésive.

11. Procédé selon l'une quelconque des revendications précédentes, **caractérisé en ce que** 10 à 40 phr, de préférence 15 à 35 phr et en particulier 20 à 30 phr de résine adhésive de préférence solide sont ajoutés en tant que première fraction de résine adhésive.

12. Procédé selon l'une quelconque des revendications précédentes, **caractérisé en ce que** 10 à 100 phr, de préférence 20 à 90 phr et en particulier 30 à 80 phr de résine adhésive de préférence liquide sont ajoutés en tant que deuxième fraction de résine adhésive ou en tant que fraction de résine adhésive supplémentaire.

13. Procédé selon l'une quelconque des revendications précédentes, **caractérisé en ce que** de la résine de terpènephénol et/ou un polyterpène est ajouté(e) en tant que résine adhésive, de préférence une résine de terpènephénol.

14. Procédé selon l'une quelconque des revendications précédentes, **caractérisé en ce que** la température de paroi des cylindres de laminage est de 80 à 120 °C, de préférence de 90 à 100 °C.

15. Procédé selon l'une quelconque des revendications précédentes, **caractérisé en ce que** la température de la broche centrale est inférieure à 20 °C, la broche centrale étant refroidie généralement avec un milieu comme par exemple de l'eau ou une huile, et la température d'entrée du milieu étant de préférence de 5 à 18 °C et en particulier de 8 à 15 °C.

16. Procédé selon l'une quelconque des revendications précédentes, **caractérisé en ce que** la masse autoadhésive présente, à la sortie de l'extrudeuse à vis planétaire, une température de moins de 170 °C, de préférence de 90 à 150 °C, plus préférablement de 110 °C à 140 °C.

17. Procédé selon l'une quelconque des revendications précédentes, **caractérisé en ce que** la masse autoadhésive, après le déchargement de l'extrudeuse à vis planétaire, est revêtue sur un matériau en forme de bande.

18. Procédé selon la revendication 17, **caractérisé en ce que** la masse autoadhésive est réticulée dans une étape suivant le revêtement, la masse autoadhésive étant réticulée de préférence sans promoteurs au moyen de faisceaux d'électrons.
